# NEUE EUROPÄISCHE PATENTSCHRIFT

(11) **EP 0 468 921 B2**
(45) Veröffentlichungstag und Bekanntmachung des Hinweises auf die Entscheidung über den Einspruch: **22.07.1998**
(45) Hinweis auf die Patenterteilung: 28.06.1995
(21) Anmeldenummer: 91810568.5
(22) Anmeldetag: 15.07.1991
(51) Int. Cl.: D06P 1/642, D06P 1/651, D06P 3/52, D06P 3/54

(54) **Wässrige Dispersion schwerlöslicher UV-Absorber**
Aqueous dispersions of slightly soluble UV absorbing agents
Dispersion aqueuse d'absorbant UV peu solubles

(30) Priorität: 23.07.1990 CH 2430/90
(43) Veröffentlichungstag der Anmeldung: 29.01.1992
(73) Patentinhaber: Ciba Specialty Chemicals Holding Inc., 4057 Basel (CH)
(72) Erfinder: Jöllenbeck, Martin, Dr., D-7800 Freiburg (DE); Zelger, Josef, CH-4125 Riehen (CH)

(56) Entgegenhaltungen:
- EP-A- 245 204
- EP-A- 328 485
- EP-A- 343 219
- EP-A- 354 174
- EP-A- 0 280 653
- EP-A- 0 345 219
- CH-A- 638 239
- DE-A- 2 142 353
- DE-A- 2 443 063
- DE-A- 2 453 146
- FR-A- 1 195 307
- FR-A- 2 546 544
- GB-A- 2 155 004
- GB-A- 2 187 746

## Beschreibung

Die vorliegende Erfindung betrifft eine wässrige Dispersion von schwerlöslichen UV-Absorbern und ihre Verwendung beim Färben von Synthesefasern, insbesondere Polyesterfasern oder säuremodifizierten Polyesterfasern.

Die erfindungsgemässe wässrige Dispersion ist dadurch gekennzeichnet, dass sie
(a) 5 bis 50 Gewichtsprozent einer s-Triazinverbindung der Formel 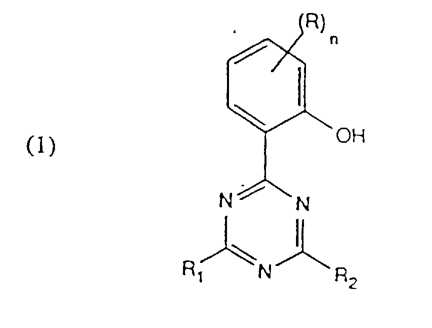 worin
   - R: nieder Alkyl, nieder Alkoxy, Halogen oder Hydroxy,
   - R₁ und R₂: unabhängig voneinander C₁-C₁₈-Alkyl, durch Hydroxy, nieder Alkoxy, nieder Alkylthio, Amino oder Mono- oder Di-alkylamino substituiertes C₁-C₁₈-Alkyl, Phenyl oder durch Chlor, Hydroxy, nieder Alkyl und/oder nieder Alkoxy substituiertes Phenyl und
   - n: 0,1 oder 2 bedeuten.
(b) 0 bis 18 Gewichtsprozent einer anionischen Verbindung aus der Gruppe der
   (ba) sauren Ester oder deren Salze von Alkylenoxidaddukten der Formel 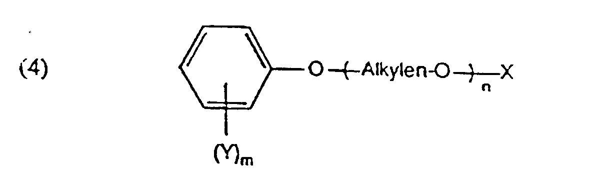 worin X den Säurerest einer anorganischen, Sauerstoff enthaltenden Säure, wie z.B. Schwefelsäure oder vorzugsweise Phosphorsäure, oder auch den Rest einer organischen Säure und
      Y C₁-C₁₂-Alkyl, Aryl oder Aralkyl bedeuten,
      "Alkylen" für den Ethylenrest oder Propylenrest steht, und
      m 1 bis 4 und n 4 bis 50 sind,
   (bb) Polystyrolsulfonate,
   (bc) Fettsäuretauride,
   (bd) alkylierten Diphenyloxid-mono- oder di-sulfonate,
   (be) Sulfonate von Polycarbonsäureestern, (bf) mit einer organischen Dicarbonsäure, oder einer anorganischen mehrbasischen Säure in einen sauren Ester übergeführte Anlagerungsprodukte von 1 bis 60, vorzugsweise 2 bis 30 Mol, Ethylenoxid und/oder Propylenoxid an Fettamine, Fettamide, Fettsäuren oder Fettalkohole je mit 8 bis 22 Kohlenstoffatomen oder an drei- bis sechswertige Alkanole mit 3 bis 6 Kohlenstoffatomen,
   (bg) Ligninsulfonate und
   (bh) Formaldehyd-Kondensationsprodukte
   aus der Gruppe der Kondensationsprodukte von Ligninsulfonaten und/oder Phenol und Formaldehyd, Kondensationsprodukte von Ditolylethersulfonaten und Formaldehyd, Kondensationsprodukte von Naphthol- oder Naphthylaminsulfonsäuren mit Formaldehyd, Kondensationsprodukte von Phenolsulfonsäuren und/oder sulfoniertem Dihydroxydiphenylsulfon und Phenolen bzw. Kresolen mit Formaldehyd und/oder Harnstoff sowie Kondensationsprodukte von Diphenyloxid-disulfonsäureDerivaten mit Formaldehyd
   und
(c) 0 bis 18 Gewichtsprozent einer nichtionischen Verbindung aus der Gruppe der
   (ca) Alkylenoxidaddukte der Formel 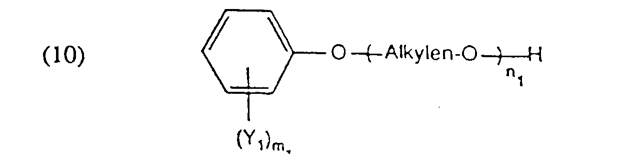 worin Y₁ C₁-C₁₂-Alkyl, Aryl oder Aralkyl bedeutet, "Alkylen" für den Ethylenrest oder Propylenrest steht und m₁ 1 bis 4 und n₁ 4 bis 50 sind
   (cb) Alkylenoxiaddukte an
   (cba) gesättigte oder ungesättigte 1-6-wertige aliphatische Alkohole
   (cbb) Fettsäuren,
   (cbc) Fettamine,
   (cbd) Fettamide,
   (cbe) Diamine,
   (cbf) Sorbitanester,
   (cc) Alkylenoxid-Kondensationsprodukte (Blockpolymerisate)
   (cd) Polymerisate von Vinylpyrrolidon, Vinylacetat oder Vinylalkohol und
   (ce) Co- oder Ter-polymere von Vinylpyrrolidon mit Vinylacetat und/oder Vinylalkohol, enthält, mit der Massgabe, dass von den Komponenten (b) und (c) mindestens eine vorhanden sein muss.

Vorteilhafterweise enthält die erfindungsgemässe wässrige Dispersion 10 bis 45 Gewichtsprozent der Komponente (a) 0,5 bis 15 Gewichtsprozent der Komponente (b) und 0,5-15 Gew. proz. der Komponente (c). Komponente (a) hat zweckmässigerweise eine Partikelgrösse unter 5 µm.

Sowohl Komponente (a) als auch die Komponenten (b) und (c) können als Einzelverbindung oder in Form eines Gemisches vorhanden sein.

Stellen die Substituenten R₁ und R₂ eine Alkylgruppe dar, so kann sie geradkettig oder verzweigt sein. Beispiele solcher Alkylreste sind Methyl, Ethyl, n-Propyl, Isopropyl, n-Butyl, Isobutyl, sek.Butyl, tert.Butyl, Amyl, Isoamyl, tert.Amyl, n-Hexyl, 2-Ethylhexyl, n-Heptyl, n-Octyl, Isooctyl, n-Nonyl, Isononyl, n-Dodecyl, Heptadecyl oder Octadecyl.

R, R₁ und R₂ als nieder Alkyl, Alkoxy oder Alkylthio stellen einen Rest mit 1 bis 4 C-Atomen, wie Methyl, Ethyl, Propyl, Isopropyl, Butyl, isobutyl, sek-Butyl, tert.-Butyl, Methoxy, Ethoxy, Propoxy, Isopropoxy, Butoxy, Isobutoxy, sek.-Butoxy, tert.-Butoxy, Methylthio, Ethylthio, Propylthio, Isopropylthio, Butylthio, Isobutylthio, sek.-Butylthio oder tert.-Butylthio dar.

Halogen bedeutet beispielsweise Fluor, Brom oder vorzugsweise Chlor. Praktisch wichtige Komponenten (a) entsprechen der Formel 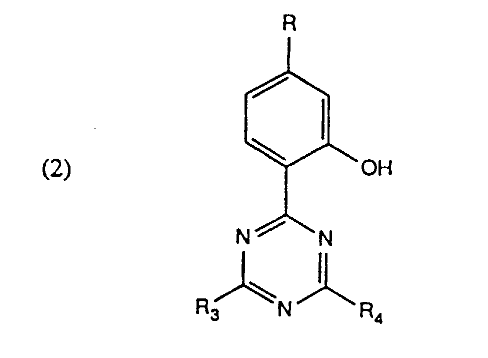 worin
- R: die oben angegebene Bedeutung hat und
- R₃ und R₄: unabhängig voneinander Alkyl mit 1 bis 4 C-Atomen, Phenyl oder durch nieder Alkyl und/oder nieder Alkoxy substituiertes Phenyl bedeuten, und bevorzugt der Formel 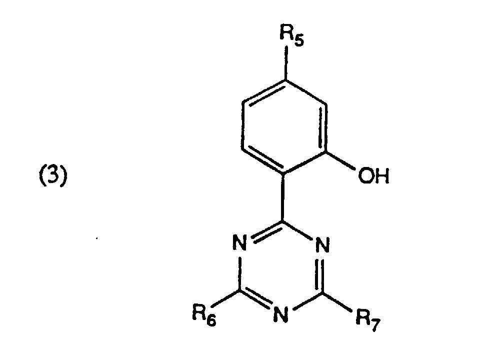 worin
- R₅: nieder Alkyl oder nieder Alkoxy und
- R₆ und R₇: unabhängig voneinander Alkyl mit 1 bis 4 C-Atomen oder Phenyl bedeuten.

Besonders bevorzugt sind Verbindungen der Formel (1), worin R nieder Alkoxy und R₁ und R₂ je Phenyl bedeuten.

Die auch als UV-Absorber bekannten Verbindungen der Formeln (1), (2) und (3), sind bekannt oder können in an sich bekannter Weise hergestellt werden, so z.B. durch Erhitzen eines Amidins und eines o-Hydroxybenzolcarbonsäureesters, vorzugsweise im ungefähren molaren Mengenverhältnis von 2:1 in siedenden, organischen Lösungsmitteln [cf. US-A-3,896,125 und Helv. Chim. Acta 55, 1566-1595 (1972)].

Geeignete Verbindungen der Formeln (1), (2) und (3) sind z.B.
2-(2'-Hydroxy-5'-methylphenyl)-4,6-dimethyl-s-triazin; F. 131°C:
2-(2'-Hydroxy-3',5'-dimethylphenyl)-4,6-dimethyl-s-triazin; F. 177°C:
2-(2'-Hydroxy-4',5'-dimethylphenyl)-4,6-dimethyl-s-triazin; λ 349 µm: T 48 %:
2-(2'-Hydroxy-4',5'-dimethylphenyl)-4,6-diethyl-s-triazin; F. 98°C:
2-(2'-Hydroxy-5'-chlorphenyl)-4,6-dimethyl-s-triazin; F. 160°C:
2-(2'-Hydroxyphenyl)-4,6-dimethyl-s-triazin: F. 133°C:
2-(2'-Hydroxy-5'-tert.-butylphenyl)-4,6-dimethyl-s-triazin: λ 352 µm: T 60 %:
2-(2'-Hydroxyphenyl)-4,6-didecyl-s-triazin: F. 53°C: 2-(2'-Hydroxyphenyl)-4,6-dinonyl-s-triazin: F. 45°C:
2-(2'-Hydroxyphenyl)-4,6-diheptadecyl-s-triazin: λ 338 µm: T 80 %:
2-(2'-Hydroxyphenyl)-4,6-dipropyl-s-triazin: F. 18 bis 20°C:
2-(2'-Hydroxyphenyl)-4,6-bis-(β-methylmercaptoethyl)-s-triazin: λ 341 µm: T 60 %:
2-(2'-Hydroxyphenyl)-4,6-bis-(β-dimethyfaminoethyl)-s-triazin: λ 340 µm: T 63 %:
2-(2'-Hydroxyphenyl)-4,6-bis-(β-butylaminoethyl)-s-triazin: λ 341 µm: T 66 %:
2-(2'-Hydroxyphenyl)-4,6-di-tert.-butyl-s-triazin: λ 338 µm: T 68 %:
2-(2'-Hydroxyphenyl)-4,6-dioctyl-s-triazin: F. 40°C:
2-(2'Hydroxy-4'-methoxyphenyl)-4,6-diphenyl-s-triazin: F. 204-205° C
2-(2'-Hydroxy-4'-ethoxyphenyl)-4,6-diphenyl-s-triazin: F. 201-202°C und
2-(2'-Hydroxy-4'-isopropyl)-4,6-diphenyl-s-triazin: F. 181-182° C.
(T = prozentuale Transmission einer Lösung von 1 mg Substanz in 100 ml Chloroform bei 1 cm Schichtdicke)

Der Säurerest X in Formel (4) leitet sich beispielsweise von niedermolekularen Dicarbonsäuren ab, wie z.B. von Maleinsäure, Bernsteinsäure oder Sulfobernsteinsäure, und ist über eine Esterbrücke mit dem Alkylenoxydteil des Moleküls verbunden. Insbesondere leitet sich X jedoch von anorganischen mehrbasischen Säüren, wie Schwefelsäure oder insbesondere Orthophosphorsäure ab.

Der Säurerest X kann als freie Säure oder in Salzform, d.h. z.B. als Alkalimetall-, Erdalkali-, Ammonium, Amin- oder Fettaminsalz, vorliegen. Beispiele für solche Salze sind Lithium-, Natrium-, Kalium-, Barium-, Magnesium-, Ammonium-, Trimethylamin-, Diethylamin-, Ethanolamin-, Diethanolamin- oder Triethanolaminsalze. Bevorzugt sind Alkalimetallsalze oder vor allem Triethanolaminsalze. Die Mono- bzw. Diethanolaminsalze sowie Amine und Fettamine können noch weiter mit 1 bis 25 Oxalkylen-Einheiten verethert sein.

Stellt der Substituent Y in Formel (4) eine Alkylgruppe dar, so kann sie geradkettig oder verzweigt sein. Beispiele solcher Alkylreste sind Methyl, Ethyl, n-Propyl, Isopropyl, n-Butyl, Isobutyl, sek.Butyl, tert.Butyl, Amyl, isoamyl, tert.Amyl, n-Hexyl, 2-Ethylhexyl, n-Heptyl, n-Octyl, Isooctyl, n-Nonyl, Isononyl oder n-Dodecyl.

Y in der Bedeutung von Aralkyl weist vorteilhafterweise insgesamt 7 bis 9 Kohlenstoffatome auf und steht in der Regel für Benzyl, α-Methylbenzyl, α,α-Dimethylbenzyl, β-Phenethyl, α-Tolylethyl oder Phenisopropyl.

Der Substituent Y in Formel (4) ist vorteilhafterweise C₄-C₁₂-Alkyl, Benzyl, vorzugsweise C₄-C₁₀-Alkyl oder besonders α-Methylbenzyl.

Der Substituent Y kann auch verschiedene der angegebenen Bedeutungen annehmen.

n ist bevorzugt 6 bis 30, während m vorzugsweise 1 bis bis 3 ist. 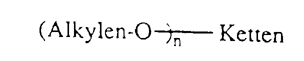 sind bevorzugt vom Ethylenglykol-, Propylenethylenglykol oder Ethylenpropylenglykol-Typus; besonders bevorzugt ist erstere.

Bevorzugte saure Ester als Komponente (ba) entsprechen der Formel 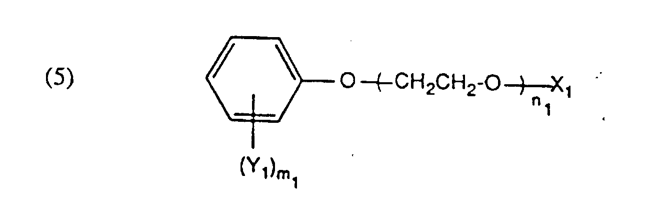 worin Y₁ C₄-C₁₂-Alkyl, Phenyl, Tolyl, Tolyl-C₁-C₃-alkyl oder Phenyl-C₁-C₃-alkyl, wie z.B. α-Methyl- oder α,α-Dimethylbenzyl bedeutet, X₁ ein Säurerest ist, der sich von Schwefelsäure oder vorzugsweise o-Phosphorsäure ableitet, und mi 1 bis 3 und n₁ 4 bis 40 sind.

Diese sauren Ester liegen vorzugsweise als Natrium-, Kalium-, Ammonium-, Diethylamin-, Triethylamin-, Diethanolamin- oder Triethanolaminsalze vor.

Die als Komponente (ba) in Frage kommenden sauren Ester der Formel (4) oder (5) werden hergestellt, indem man Alkylenoxid (Ethylenoxid oder Propylenoxid) an eine definitionsgemäss substituierte Phenolverbindung anlagert und das Anlagerungsprodukt mit einer mehrbasischen Sauerstoffsäure oder einem funktionellen Derivat dieser Säure, wie z.B. Säureanhydride, Säurehalogenide, Säureester oder Säureamide in die sauren Ester und gegebenenfalls den erhaltenen sauren Ester in die obengenannten Salze überführt. Als Beispiele dieser funktionellen Derivate seien Phosphorpentoxid, Phosphoroxytrichlorid, Chlorsulfonsäure oder Sulfaminsäure genannt. Sowohl die Alkylenoxidanlagerung als auch die Veresterung können nach bekannten Methoden durchgeführt werden.

Gut geeignete Komponenten (ba) sind saure Ester oder deren Salze eines Polyadduktes von 4 bis 40 Mol Ethylenoxid an 1 Mol eines Phenols, das mindestens eine C₄-C₁₂-Alkylgruppe, eine Phenylgruppe, eine Tofylgnuppe, eine α-Tolylethylgruppe, eine Benzylgruppe, eine α-Methylbenzylgruppe oder eine α,α-Dimethylbenzylgruppe aufweist, wie z.B. Butylphenol, Tributylphenol, Octylphenol, Nonylphenol, Dinonylphenol, o-Phenylphenol, Benzylphenol, Dibenzylphenol, α-Tolylethylphenol, Dibenzyl-(nonyl)-phenol, α-Methylbenzylphenol, Bis-(α-Methylbenzyl)-phenol oder Tris-(α-methylbenzyl)-phenol, wobei diese sauren Ester einzeln oder in Mischung verwendet werden können.

Von besonderem Interesse sind saure Phosphorsäureester der Addukte von 6 bis 30 Mol Ethylenoxid an 1 Mol 4-Nonylphenol 1 Mol Dinonylphenol oder besonders an 1 Mol von Verbindungen, die durch Anlagerung von 1 bis 3 Mol von Styrolen an 1 Mol Phenole hergestellt werden, wobei die Phosphorsäureester zweckmässigerweise als Gemische der entsprechenden Salze eines Mono- oder Diesters vorhanden sind.

Die Herstellung der Styrolanlagerungsprodukte erfolgt in bekannter Weise vorzugsweise in Gegenwart von Katalysatoren, wie Schwefelsäure, p-Toluofsulfonsäure oder vor allem Zinkchlorid. Als Styrole kommen zweckmässigerweise Styrol, α-Methylstyrol oder Vinyltoluol (4-Methylstyrol) in Betracht. Beispiele für die Phenole sind Phenol, Kresole oder Xylenole.

Ganz besonders bevorzugt als Komponente (ba) sind saure Phosphorsäureester (Mono- und Diester) oder deren Salze von Oxalkylierungsprodukten der Formel 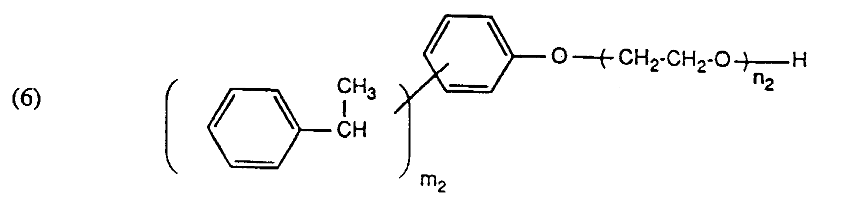 worin m₂ 1 bis 3 und n₂ 8 bis 30, vorzugsweise 12 bis 20 bedeuten.

Als Beispiele für Oxalkylierungsprodukte der Formeln (5) und (6) seien im einzelnen genannt:
- Oxalkylierungsprodukt mit 18 Ethylenoxideinheiten des Anlagerungsproduktes von 2 Mol Styrol an 1 Mol Phenol
- Oxalkylierungsprodukt mit 18 Ethylenoxideinheiten des Anlagerungsproduktes von 3 Mol Styrol an 1 Mol Phenol
- Oxalkylierungsprodukt mit 27 Ethylenoxideinheiten des Anlagerungsproduktes von 2 Mol 4-Methylstyrol an 1 Mol Phenol
- Oxalkylierungsprodukt mit 17 Ethylenoxideinheiten des Anlagerungsproduktes von 3 Mol 4-Methylstyrol an 1 Mol Phenol
- Oxalkylierungsprodukt mit 18 Ethylenoxideinheiten des Gemisches aus einem Anlagerungsprodukt von 2 Mol Styrol an 1 Mol Phenol und einem Anlagerungsprodukt von 3 Mol Styrol an 1 Mol Phenol
- Oxalkylierungsprodukt mit 13 Ethylenoxideinheiten des Gemisches aus einem Anlagerungsprodukt von 2 Mol Styrol an 1 Mol Phenol und einem Anlagerungsprodukt von 3 Mol Styrol an 1 Mol Phenol.

Als Beispiele für die unter (bc) bis (bh) erwähnten anionischen Verbindungen seien genannt:
- als Komponente (bc) z.B. Verbindungen der Formel (7) R-CO-NH-CH₂-CH₂-SO₃H worin R C₁₁-C₁₇-Alkyl ist (vgl. z.B. US-A-4 219 480)
- als Komponente (bd) z.B. Verbindungen der Formel (8) 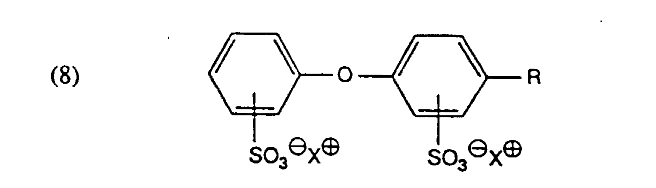 worin R C₁₀-C₁₈-Alkyl und X Wasserstoff oder Alkatimetall bedeuten;
- als Komponente (be) z.B. Dihexylsulfosuccinate, Di-2-ethylhexylsulfosuccinate, Dioctylsulfosuccinate, Sulfosuccinamide oder Verbindungen der Formel 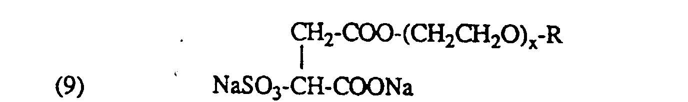 worin R C₈-C₁₈-Alkyl oder Alkylphenol mit 4 bis 12 C-Atomen im Alkylteil und x 1 bis 10, vorzugsweise 2 bis 4 bedeuten.
- als Komponente (bf) mit z.B. Maleinsäure, Malonsäure, Sulfobernsteinsäure und vorzugsweise o-Phosphorsäure oder insbesondere Schwefelsäure in einen sauren Ester überführten Anlagerungsprodukte von 2 bis 30 Mol Ethylenoxid an Fettamine, Fettamide, Fettsäuren oder Fettalkohole oder 3-6-wertige Alkanole;
- als Komponente (bh) z.B. Kondensationsprodukte von Ligninsulfonaten und/oder Phenol und Formaldehyd, Kondensationsprodukte von Formaldehyd mit aromatischen Sulfonsäuren, wie Kondensationsprodukte von Ditolylethersulfonaten und Formaldehyd, Kondensationsprodukte von Naphthol- oder Naphthylaminsulfonsäuren mit Formaldehyd, Kondensationsprodukte von Phenolsulfonsäuren und/oder sulfoniertem Dihydroxydiphenylsulfon und Phenolen bzw. Kresolen mit Formaldehyd und/oder Hamstoff sowie Kondensationsprodukte von Diphenyloxid-disulfonsäure-Derivaten mit Formaldehyd in Betracht.

Als Komponente (bh) sind besonders bevorzugt
- Kondensationsprodukte von Ditolylethersulfonaten und Formaldehyd wie sie z.B. in US-A-4386037 beschrieben sind,
- Kondensationsprodukte von Phenol und Formaldehyd mit Ligninsulfonaten, wie sie z.B. in US-A-3931072 beschrieben sind,
- Kondensationsprodukte von Naphthol-(2)-sulfonsäure-6, Kresol, Natriumbisulfit und Formaldehyd [vgl. FIAT-Report 1013 (1946)], und
- Kondensationsprodukte aus Diphenylderivaten und Formaldehyd wie sie z.B. in US-A-4202838 beschrieben sind.

Der Säurerest der anionischen Verbindungen liegt in der Regel in Salzform, d.h. als Alkalimetall-, Ammonium- oder Aminsalz vor. Beispiele für solche Salze sind Lithium-, Natrium-, Kalium-, Ammonium-, Trimethylamin-, Aethanolamin-, Diethanolamin- oder Triethanolaminsalze.

Bevorzugte erfindungsgemässe Dispersionen enthalten die Komponenten (b) und (c) in einem Verhältnis (b):(c) von 20:1 bis 1:20, vorzugsweise 5:1 bis 1:5.

Gut geeignete Komponenten (ca) sind Polyaddukte von 4 bis 40 Mol Ethylenoxid an 1 Mol eines Phenols, das mindestens eine C₄-C₁₂-Alkylgruppe, eine Phenylgruppe, eine Tolylgruppe, eine α-Tolylethylgruppe, eine Benzylgruppe, eine α-Methylbenzylgruppe oder eine α-α-Dimethylbenzylgruppe aufweist, wie z.B. Butylphenol, Tributylphenol, Octylphenol, Nonylphenol, Dinonylphenol, α-Phenylphenol, Benzylphenol, Dibenzylphenol, α-Tolylethylphenol, Dibenzyl-(nonyl)-phenol, α-Methylbenzylphenol, Bis-(α-Methylbenzyl)-phenol oder Tris-(α-methylbenzyl)-phenol, wobei diese Addukte einzeln oder in Mischung verwendet werden können.

Von besonderem Interesse als Komponente (ca) sind Addukte von 6 bis 30 Mol Ethylenoxid an 1 Mol 4-Nonylphenol, an 1 Mol Dinonylphenol oder besonders an 1 Mol von Verbindungen, die durch Anlagerung von 1 bis 3 Mol von Styrolen an 1 Mol Phenole hergestellt werden.

Die Herstellung der Styrolanlagerungsprodukte erfolgt in bekannter Weise vorzugsweise in Gegenwart von Katalysatoren, wie Schwefelsäure, p-Toluolsulfonsäure oder vor allem Zinkchlorid. Als Styrole kommen zweckmässigerweise Styrol, α-Methylstyrol oder Vinyltoluol (4-Methylstyrol) in Betracht. Beispiele für die Phenole sind Phenol, Kresole oder Xylenole.

Ganz besonders bevorzugt sind Ethylenoxidaddukte der Formel (11) 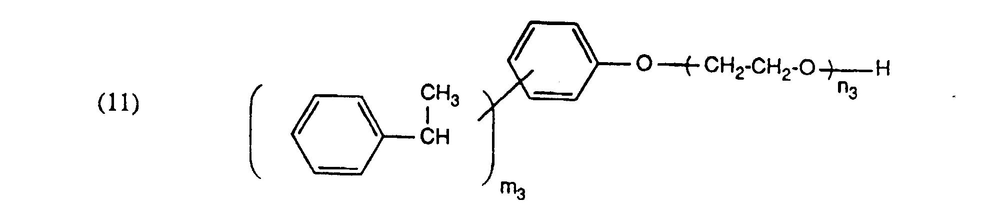 worin m₃ 1 bis 3 und n₃ 8 bis 30 bedeuten.

Beispiele für solche Addukte sind weiter oben angegeben. Ebenfalls bevorzugt sind Ethylenoxidaddukte der Formel 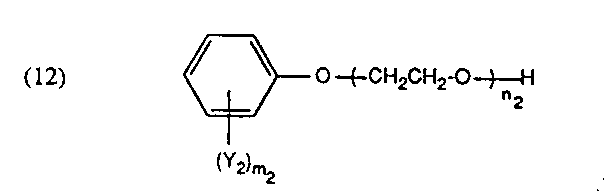 worin Y₂ C₄-C₁₂-Alkyl, Phenyl, Tolyl, Tolyl-C₁-C₃-alkyl oder Phenyl-C₁-C₃-alkyl, wie z.B. α-Methyl- oder α,α-Dimethylbenzyl bedeutet, und m₂ 1 bis 3 und n₂ 4 bis 40 sind.

Die nichtionogene Komponente (cb) ist vorteilhafterweise
- ein Alkylenoxidanlagerungsprodukt von 1 bis 100 Mol Alkylenoxid, z.B. Ethylenoxid und/oder Propylenoxid, an 1 Mol eines aliphatischen Monoalkohols mit mindestens 4 Kohlenstoffatomen, eines 3- bis 6-wertigen aliphatischen Alkohols oder eines gegebenenfalls durch Alkyl, Phenyl, α-Tolylethyl, Benzyl, α-Methylbenzyl oder α,α-Dimethylbenzyl substituierten Phenols (cba);
- ein Alkylenoxidanlagerungsprodukt von 1 bis 100, vorzugsweise 2 bis 80 Mol Ethylenoxid wobei einzelne Ethylenoxideinheiten durch substituierte Epoxide, wie Styroloxid und/oder Propylenoxid, ersetzt sein können, an höhere unbesättigte oder gesättigte Monoalkohole (cba), Fettsäuren (cbb), Fettamine (cbc) oder Fettamide (cbd) mit 8 bis 22 Kohlenstoffatomen;
- ein Alkylenoxidanlagerungsprodukt, vorzugsweise ein Ethylenoxid-Propylenoxid-Addukt an Ethylendiamin (cbe);
- ein ethoxyliertes Sorbitanester mit langkettigen Estergruppen, wie z.B. Polyoxiethylen-Sorbitanmonolaurat mit 4 bis 20 Ethylenoxideinheiten oder Polyoxiethylen-Sorbitantrioleat mit 4 bis 20 Ethylenoxideinheiten (cbf).

Bevorzugte Komponenten (cc) sind Ethylenoxidaddukte an Polypropylenoxid (sogenannte EO-PO-Blockpolymere) und Propylenoxidaddukte an Polyethylenoxid (sogenannte umgekehrte EO-PO-Blockpolymere).

Besonders bevorzugt sind Ethylenoxid-Propylenoxid-Blockpolymere mit Molekulargewichten der Polypropylenoxidbasis von 1700 bis 4000 und einem Ethylenoxidgehalt im Gesamtmolekül von 30-80 %, insbesondere 60-80 %.

Ausser den Komponenten (a) (b) und (c) kann die erfindungsgemässe Dispersion zweckmässig zusätzlich als Komponente (d) ein Stabilisierungs- oder Verdickungsmittel enthalten.

Als Komponente (d) eignen sich insbesondere Carboxylgruppen enthaltende Polymerisate. Diese werden in Form von 0.5 bis 10 %igen. vorzugsweise 0,5 bis 5 %igen wässrigen Lösungen oder Dispersionen, bezogen auf die Lösung oder Dispersion eingesetzt.

Diese Polymerisate stellen vorteilhafterweise polymerisierte ethylenisch ungesättigte Mono- oder Dicarbonsäuren von 3 bis 5 Kohlenstoffatomen, wie z.B. Polyacrylsäure oder Polymerisate von Methacrylsäure, Crotonsäure, Itaconsäure, Teraconsäure, Maleinsäure bzw. deren Anhydrid, Fumarsäure, Citraconsäure oder Mesaconsäure, Copolymerisate aus Olefinen, z.B. Ethylen oder Propylen, Diketene, Acrylsäureestern, Methacrylsäureestern oder Acrylamiden und den vorgenannten Monomeren einschliesslich der Acrylsäure oder Copolymerisate der Acrylsäure mit Methacrylsäure, Methacrylnitril oder vinylmonomeren, wie z.B. Vinylphosphonsäure, Copolymerisate aus Maleinsäure und Styrol, Maleinsäure und einem Vinylether oder Maleinsäure und einem Vinylester z.B. Vinylacetat oder Copolymere von Vinylpyrrolidon mit Vinylacetat oder Vinylpropionsäure dar.

Die Verdickungsmittel bildenden carboxylgruppenhaltigen Polymerisate können ein Molekulargewicht von 0,5 bis 6 Millionen haben.

Als besonders brauchbare Komponenten (d) haben sich Lösungen von Polyacrylsäure oder auch Copolymerisate aus Acrylsäure und Acrylamid gezeigt, wobei das entsprechende Molekulargewicht von 0,5 bis 6 Millionen schwanken kann. Die Copolymerisate weisen vorteilhafterweise ein Molverhältnis Acrylsäure:Acrylamid von 1:0,8 bis 1:1,2 auf. Als Komponente (d) kann ebenfalls ein teilweise hydrolysiertes Polymaleinsäureanhydrid verwendet werden. Dieses liegt in der Regel teilweise in Form eines wasserlöslichen Salzes vor und besitzt ein Molgewicht, das vorzugsweise zwischen 300 und 5000 liegt.

Weitere als Komponente (d) brauchbare Verdickungsmittel sind Polysaccharide, wie z.B. Carboxyme-thylcellulose, Methylcellulose, Methyl- oder Ethylhydroxyethylcellulose, Johannisbrotkernmehlether oder Stärkeether sowie Alginate, Polyethylenglykole, Polyvinylpyrrolidone, Polyvinylalkohole oder auch feinverteilte Kieselsäure vorzugsweise mit spezifischer Oberfläche von 50 bis 380 m²/g und Schichtsilikate, wie z.B. Bentonite, Bentone, Smektite, Montmorillonite. Gut geeignet sind auch anionische Heteropolysaccharide, die aus den Monosacchariden Glukose und Mannose und Glucuronsäure gebildet sind.

Die Mengen dieser Zusatzbestandteile (d) liegen im allgemeinen von 0,05 bis 8 Gewichtsprozent, vorzugsweise 0,1 bis 4 Gewichtsprozent, bezogen auf die gesamte wässrige Dispersion vor.

Neben den Komponenten (a), (b) und (c) oder (a), (b), (c) und (d) kann die erfindungsgemässe wässrige Dispersion noch zusätzlich Antischaummittel, Konservierungsmittel oder Gefrierschutzmittel enthalten.

Die anionischen und nichtionischen Verbindungen können allein oder untereinander kombiniert zur Anwendung kommen.

Als Antischaummittel können die erfindungsgemässen Dispersionen Silikonöle sowie auch Entschäumer auf der Basis von Tributylphosphat, 2-Ethylhexanol oder Tetramethyl-5-decin-diolen (= Surfynol) enthalten.

Bevorzugte Antischaummittel sind Alkylendiamide. Diese entsprechen zweckmässigerweise der Formel

(13) V₁-CO-NH-Q-NH-CO-V₂

in der V₁ und V₂, unabhängig voneinander, je einen aliphatischen Rest mit 9 bis 23 Kohlenstoffatomen und Q einen Alkylenrest mit 1 bis 8, vorzugsweise 1, 2 oder 3 Kohlenstoffatomen bedeuten.

Das Alkylendiamid kann als Einzelverbindung oder in Form eines Gemisches vorhanden sein.

Die aliphatischen Reste V₁ und V₂ können geradkettig oder verzweigt sein. Sie stellen zusammen mit der CO-Gruppe vorteilhafterweise den Säurerest einer ungesättigten oder vorzugsweise gesättigten aliphatischen Carbonsäure mit 10 bis 24 Kohlenstoffatomen dar. Als aliphatische Carbonsäuren seien beispielsweise Caprin-, Laurin-, Kokosfett-, Myristin-, Palmkernfettsäure, Palmitin-, Talgfett-, Oel-, Ricinolein-, Linol-, Linolen-, Stearin-, Arachin-, Arachidon-, Behen-, Eruca- oder Lignocerinsäure genannt. Behensäure und besonders Stearinsäure sind bevorzugt.

Es können auch Gemische dieser Säuren verwendet werden, wie sie bei der Spaltung von natürlichen Oelen oder Fetten gewonnen werden. Kokosfettsäure, Palmkernfettsäure, Palmitin-/Stearinsäuregemische, Talgfettsäure und Arachin-/Behensäuregemische sind besonders bevorzugte Gemische.

Vorzugsweise bedeuten V₁ und V₂ jeweils einen Alkylrest mit 9 bis 23 Kohlenstoffatomen und insbesondere mit 15 bis 21 Kohlenstoffatomen.

Q stellt insbesondere eine Alkylengruppe dar, die 2 bis 5 Kohlenstoffatome enthält und geradkettig oder verzweigt sein kann. Es handelt sich beispielsweise um die -CH₂CH₂-, -CH₂CH₂CH₂-,

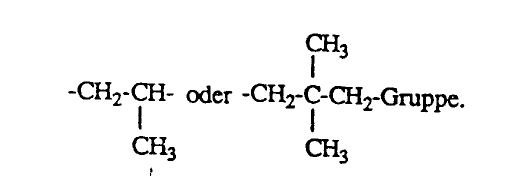

Typische Vertreter für Alkylendiamide als Antischaummittel sind Methylen-bis-stearinsäureamid, Ethylen-bis-stearinsäureamid oder Ethylen-bis-behensäureamid.

Das Alkylendiamid ist vorzugsweise in einer Menge von 0,2 bis 3 Gewichtsprozent in der Dispersion vorhanden.

Als Konservierungsmittel, die in den erfindungsgemässen Dispersionen enthalten sein können, können die verschiedensten handelsüblichen Produkte, wie wässrige Lösungen von Formaldehyd, 6-Acetoxy-2,4-dimethyldioxan, 1,2-Benzisothiazolin-3-on und besonders 2-Chloracetamid in Betracht kommen.

Als Gefrierschutzmittel, die den erfindungsgemässen Dispersionen zur Erhaltung der Fliessfähigkeit bei tiefen Temperaturen und zur Verhinderung des Ausfrierens von Wasser zugesetzt werden können, seien Glykole oder Polyole, wie z.B. Ethylenglykol, Propylenglykol- bzw. Glyzerin sowie Polyethylenglykole, wie z.B. Di-, Tri- oder Tetraethylenglykol genannt. Ein bevorzugtes Antifrostmittel ist Propylenglykol.

Die erfindungsgemässen wässrigen Dispersionen enthalten mit Vorteil, jeweils bezogen auf die gesamte Dispersion
5-50 Gewichtsprozent der Komponente (a),
0-18 vorzugsweise 0,5-15 Gewichtsprozent der Komponente (b),
0-18 vorzugsweise 0,5-15 Gewichtsprozent der Komponente (c),
0 - 5 vorzugsweise 0,1 bis 4 Gewichtsprozent der Komponente (d),
0 - 8 Gewichtsprozent der weiteren, von der Komponente (b) verschiedenen anionischen Komponente,
0 - 8 Gewichtsprozent der weiteren, von Komponente (c) verschiedenen nichtionischen Komponente,
0 - 7 vorzugsweise 0,1 bis 5 Gewichtsprozent Antischaummittel,
0 - 1 vorzugsweise 0,1 bis 0,5 Gewichtsprozent Konservierungsmittel und
0-20 Gewichtsprozent Gefrierschutzmittel.

Bevorzugte erfindungsgemässe Dispersionen enthalten
- als anionische Komponente (b)
- ein Kondensationsprodukt von Formaldehyd mit Ditolylethersulfonat;
- ein Gemisch aus den Komponenten (ba) bis (bh);
- ein Gemisch aus einem Kondensationsprodukt von Formaldehyd mit Ditolylethersulfonat und einem sauren Phosphorsäureester oder dessen Salz des Oxalkylierungsproduktes der Formel (6) oder
- als nichtionische Komponente (c) eine Mischung aus einem Alkylenoxidaddukt der Formel (10) und einem Alkylenoxid-Kondensationsprodukt (cc) oder
- ein Alkylenoxid-Kondensationsprodukt (cc) oder
- als anionische Komponente (b) einen sauren Phosphorsäureester oder dessen Salz des Oxalkylierungsproduktes der Formel (6) und als nichtionogene Komponente (c) ein Alkylenoxidaddukt der Formel (10).

Die Herstellung der erfindungsgemässen Dispersion erfolgt zweckmässigerweise, indem man die s-Triazinverbindungen der Formel (1), mit einem Dispergiermittel z.B. dem sauren Ester der Formel (4) und Wasser in einem Mischer anteigt und nach allfälliger Zugabe der erwünschten Zusatzbestandteile wie nichtionische Tenside (c), weiterer anionische und/oder nichtionischer Verbindungen einschliesslich der Antischaummittel, Konservierungsmittel und Gefrierschutzmittel 1 bis 30, vorzugsweise 1 bis 10 Stunden lang dispergiert. Die Dispergierung wird vorteilhafterweise durch Einwirkung von hohen Scherkräften z.B. durch Mahlen in einer Kugel-, Sand- oder Perlmühle durchgeführt. Nach dem Mahlen kann eine wässrige Lösung des Stabilisierungs- oder Verdickungsmittels (Komponente (d)) und gewünschtenfalls noch Wasser zugesetzt werden, worauf bis zur gleichmässigen Verteilung gerührt wird.

Die erfindungsgemässen Dispersionen zeichnen sich durch gute Transport- und Lagerstabilität aus. Sie sind insbesondere sehr stabil bei höheren Temperaturen bis zu 130°C, wenn sie in Färbebädem eingesetzt werden.

Verwendung findet die erfindungsgemässe Dispersion je nach dem Farbstoff beim Färben von Synthesefasern. Das Färbeverfahren wird jeweils in üblicher Weise durchgeführt. Die erfindungsgemässe Dispersion wird in ein wässriges Bad langsam unter Rühren eingetragen, wonach die Flotte nach dem Zusatz vom Farbstoff zum Färben bereitgestellt ist.

Gegenstand der vorliegenden Erfindung ist demnach auch ein Verfahren zum Färben von synthetischem Fasermaterial mit kationischen oder Dispersionsfarbstoffen Das Verfahren ist dadurch gekennzeichnet, dass man dieses Material in Gegenwart der erfindungsgemässen Hilfsmitteldispersion färbt.

Die Einsatzmengen, in denen die erfindungsgemässe Hilfsmitteldispersion den Färbebädern zugesetzt wird, bewegen sich von 0,5 bis 10 %, vorzugsweise 1 bis 5 % vom Warengewicht.

Als Fasermaterial, insbesondere Textilmaterial, das in Gegenwart des neuen als Lichtschutzmittel verwendeten Hilfsmittelgemisches gefärbt werden kann, sind z.B. Celluloseesterfasern, wie Cellulose-2 1/2-acetaffasern und -triacetaffasern; aromatische Polyamidfasern, die sich z.B. von Poly-(metaphenylenisophthalamid) ableiten, sauer modifizierte Polyesterfasern und besonders lineare Polyesterfasern zu erwähnen. Dabei werden Celluloseester- und Polyesterfasern bevorzugt mit Dispersionsfarbstoffen und sauer modifizierte Polyesterfasern und aromatische Polyamidfasern bevorzugt mit kationischen Farbstoffen gefärbt.

Unter linearen Polyesterfasern sind dabei Synthesefasern zu verstehen, die z.B. durch Kondensation von Terephthalsäure mit Ethylenglykol oder von Isophthalsäure oder Terephthalsäure mit 1,4-Bis-(hydroxymethyl)-cyclohexan erhalten werden, sowie Mischpolymere aus Terephthal- und Isophthalsäure und Ethylenglykol. Der in der Textilindustrie bisher fast ausschliesslich eingesetzte lineare Polyester besteht aus Terephthalsäure und Ethylenglykol. Sauer modifizierte Polyesterfasern sind beispielsweise Polykondensationsprodukte von Terephthalsäure oder Isophthalsäure, Ethylenglykol und 1,2-Dihydroxy-3-beziehungsweise 1,3-Dihydroxy-2-(3-natriumsulfopropoxy)-propan, 2,3-Dimethylol-1-(natriumsulfopropoxy)-butan, 2,2-Bis-(3-natriumsulfopropoxyphenyl)-propan oder 3,5-Dicarboxy-benzolsulfonsäure bzw. sulfonierter Terephthalsäure, sulfonierter 4-Methoxybenzolcarbonsäure oder sulfonierter Diphenyl-4,4'-dicarbonsäure.

Die Fasermaterialien können auch als Mischgewebe unter sich oder mit anderen Fasern, z.B. Mischungen aus Polyacrylnitril/Polyester, Polyamid/Polyester, Polyester/Baumwolle, Polyester-Viskose, Polyester/Wolle und Polyester/Polyacrylnitril/Polyamid verwendet werden.

Das zu färbende Textilmaterial kann sich in verschiedenen Verarbeitungsstadien befinden. Beispielsweise kommen in Betracht: loses Material, Stückware, wie Gewirke oder Gewebe, Garn in Wickel- oder MuffForm. Letztere können Wickeldichten von 200 bis 600 g/dm³, insbesondere 400 bis 450 g/dm³, aufweisen.

Die für das erfindungsgemässe Verfahren geeigneten kationischen Farbstoffe können verschiedenen Farbstoffklassen angehören. Insbesondere handelt es sich um die gebräuchlichen Salze, beispielsweise Chloride, Sulfate oder Metallhalogenide, wie z.B. Zinkchloriddoppelsalze von kationischen Farbstoffen, deren kationischer Charakter z.B. von einer Carbonium-, Oxonium-, Sulfonium- oder vor allem Ammoniumgruppe herrührt. Beispiele für solche chromophore Systeme sind Azofarbstoffe, vor allem Monoazo- oder Hydrazonfarbstoffe, Diphenylmethan-, Triphenylmethan-, Methin- oder Azomethinfarbstoffe, Cumarin-, Ketonimin-, Cyanin-, Azin-, Xanthen-, Oxazin- oder Thiazinfarbstoffe. Schliesslich können auch Farbsalze der Phthalocyanin- oder Anthrachinonreihe mit externer Oniumgruppe, beispielsweise einer Alkylammoniumoder Cycloammoniumgruppe sowie Benzo-1,2-pyranfarbsalze, die Cycloammoniumgruppen enthalten, verwendet werden.

Die zu verwendenden Dispersionsfarbstoffe, die in Wasser nur sehr wenig löslich sind und in der Farbflotte zum grössten Teil in Form einer feinen Dispersion vorliegen, können den verschiedensten Farbstoffklassen angehören, beispielsweise den Acridon-, Azo-, Anthrachinon-, Cumarin-, Methin-, Perinon-, Naphthochinonimin-, Chinophthalon, Styryl- oder Nitrofarbstoffen.

Es können auch Mischungen von kationischen oder Dispersionsfarbstoffen erfindungsgemäss eingesetzt werden.

Die Menge der der Flotte zuzusetzenden Farbstoffe richtet sich nach der gewünschten Farbstärke; im allgemeinen haben sich Mengen von 0,01 bis 10, vorzugsweise 0,02 bis 5 Gewichtsprozent, bezogen auf das eingesetzte Textilmaterial, bewährt.

Die erfindungsgemäss zu verwendenden Hilfsmittel können auch in Mischung mit bekannten Diffusionsbeschleunigern auf Basis von z.B. Di- oder Trichlorbenzol, Methyl- oder Ethylbenzol, o-Phenylphenol, Benzylphenol, Diphenylether, Chlordiphenyl, Methyldiphenyl, Cyclohexanon, Acetophenon, Alkylphenoxyethanol, Mono-, Di- oder Trichlorphenoxyethanol oder -propanol, Pentachlorphenoxyethanol, Alkylphenylbenzoate, oder insbesondere auf Basis von Diphenyl, Methyldiphenylether, Dibenzylether, Methylbenzoat, Butylbenzoat oder Phenylbenzoat eingesetzt werden.

Die Diffusionsbeschleuniger werden vorzugsweise in einer Menge von 0,5 g bis 5 g/l Flotte oder 5 bis 30 Gewichtsprozent, bezogen auf die Hiltsmitteldispersion, verwendet.

Die Farbbäder können je nach dem zu behandelnden Textilmaterial neben den Farbstoffen und dem erfindungsgemässen Hilfsmittelgemisch, Oligomereninhibitoren, Antischaummittel, Faltenfreimittel, Retarder und vorzugsweise Dispergiermittel enthalten.

Die Dispergiermittel dienen vor allem zur Erzielung einer guten Feinverteilung der Dispersionsfarbstoffe. Es kommen die beim Färben mit Dispersionsfarbstoffen allgemein gebräuchlichen Dispergatoren in Frage.

Als Dispergiermittel kommen vorzugsweise sulfatierte oder phosphatierte Anlagerungsprodukte von 15 bis 100 Mol Ethylenoxid oder vorzugsweise Propylenoxid an mehrwertige, 2 bis 6 Kohlenstoffatome aufweisende aliphatische Alkohole wie z.B. Ethylenglykol, Glycerin oder Pentaerythrit oder an mindestens zwei Aminogruppen oder eine Aminogruppe und eine Hydroxylgruppe aufweisende Amine mit 2 bis 9 Kohlenstoffatomen sowie Alkylsulfonate mit 10 bis 20 Kohlenstoffatomen in der Alkylkette, Alkylbenzolsulfonate mit geradkettiger oder verzweigter Alkylkette mit 8 bis 20 Kohlenstoffatomen in der Alkylkette, wie z.B. Nonyl- oder Dodecylbenzolsulfonat 1,3,5,7-Tetramethyloctylbenzolsulfonat oder Octadecylbenzolsulfonat, sowie Alkylnaphthalinsuffonate oder Sulfobernsteinsäureester, wie Natriumdioctylsulfosuccinat, in Betracht.

Besonders günstig haben sich als anionische Dispergiermittel Ligninsulfonate. Polyphosphate und vorzugsweise Formaldehyd-Kondensationsprodukte aus Formaldehyd und gegebenenfalls mono- oder bifunktionellen Phenolen wie z.B. aus Kresol, β-Naphtholsulfonsäure und Formaldehyd, erwiesen. Bevorzugt ist das Dinatriumsalz des Di- oder Tri-(6-sulfonaphthyl-2-)methans.

Es können auch Gemische von anionischen Dispergiermitteln zum Einsatz kommen. Normalerweise liegen die anionischen Dispergiermittel in Form ihrer Alkalimetallsalze. Ammoniumsalze oder Aminsalze vor. Diese Dispergiermittel werden vorzugsweise in einer Menge von 0,5 bis 8 g/l Flotte verwendet.

Die Färbebäder können auch übliche Zusätze, zweckmässig Elektrolyte wie Salze, z.B. Natriumsulfat, Ammoniumsulfat, Natrium- oder Ammoniumphosphate oder -polyphosphate, Metallchloride oder -nitrate wie Calciumchlorid, Magnesiumchlorid bzw. Calciumnitrate, Ammoniumacetat oder Natriumacetat und/oder Säuren, z.B. Mineralsäuren, wie Schwefelsäure oder Phosphorsäure, oder organische Säuren, zweckmässig niedere aliphatische Carbonsäuren, wie Ameisen-, Essig- oder Oxalsäure enthalten. Die Säuren dienen von allem der Einstellung des pH-Wertes der erfindungsgemäss verwendeten Flotten, der in der Regel 4 bis 6,5, vorzugsweise 4,5 bis 6, beträgt.

Die Färbungen erfolgen mit Vorteil aus wässriger Flotte nach dem Ausziehverfahren. Das Flottenverhältnis kann dementsprechend innerhalb eines weiten Bereiches gewählt werden, z.B. 1:3 bis 1:100, vorzugsweise 1:7 bis 1:50. Die Temperatur, bei der gefärbt bzw. aufgehellt wird, beträgt mindestens 70°C und in der Regel ist sie nicht höher als 140°C. Vorzugsweise liegt sie im Bereich von 80 bis 135°C.

Lineare Polyesterfasern und Cellulosetriacetatfasern färbt man vorzugsweise nach dem sogenannten Hochtemperaturverfahren in geschlossenen und zweckmässigerweise auch druckbeständigen Apparaturen bei Temperaturen von über 100°C, bevorzugt zwischen 110 und 135°C, und gegebenenfalls unter Druck. Als geschlossene Gefässe eignen sich beispielsweise Zirkulationsapparaturen wie Kreuzspul- oder Baumfärbeapparate, Haspelkufen, Düsen- oder Trommelfärbemaschinen, Muff-Färbeapparate, Paddeln oder Jigger.

Cellulose-2 1/2-acetatfasern färbt man vorzugsweise bei Temperaturen von 80-85°C. Die Färbung der aromatischen Polyamidfasern oder sauer modifizierten Polyesterfasern wird vorzugsweise bei einer Temperatur von 80 bis 130°C vorgenommen.

Das Färbeverfahren kann so durchgeführt werden, dass man das Färbegut entweder zuerst mit dem Hilfsmittelgemisch kurz behandelt und anschliessend färbt oder vorzugsweise gleichzeitig mit dem Hilfsmittelgemisch und dem Farbstoff behandelt.

Vorzugsweise lässt man das Färbegut während 5 Minuten bei 60-80°C im Bad, das den Farbstoff, das Hilfsmittelgmisch und gegebenenfalls weitere Zusätze enthält und auf einen pH-Wert von 4,5 bis 5,5 eingestellt ist, vorlaufen, steigert die Temperatur innerhalb von 15 bis 35 Minuten auf 110 bis 135°C, vorzugsweise 125-130°C und belässt die Färbeflotte 15 bis 90 Minuten, vorzugsweise 30 bis 60 Minuten, bei dieser Temperatur.

Die Fertigstellung der Färbungen erfolgt durch Abkühlen der Färbeflotte auf 60 bis 80°C, Spülen der Färbungen mit Wasser und gegebenenfalls durch Reinigung auf übliche Weise im alkalischen Medium unter reduktiven Bedingungen. Die Färbungen werden dann wiederum gespült und getrocknet.

Man erhält auf synthetischem Fasermaterial, insbesondere auf linearen Polyesterfasern, gleichmässige und farbkräftige Ausfärbungen, die sich zudem durch gute Lichtechtheit und Reibechtheiten auszeichnen. Während des Färbens bleibt die Färbeflotte stabil und entstehen keine Ablagerungen im Inneren der Färbeapparaturen.

In den folgenden Beispielen sind die Teile Gewichtsteile und die Prozente Gewichtsprozente.

### Beispiel 1

In einer Sandmühle werden
35 Teile 2-(2'-Hydroxy-4'-propoxyphenyl)-4,6-diphenyl-s-triazin
14 Teile des mit Triethanolamin neutralisierten Umsetzungsproduktes von Phosphorpentoxid mit einem Oxalkylierungsproduktes mit 18 Ethylenoxideinheiten des Anlagerungsproduktes von 2,5 bis 3 Mol Styrol an 1 Mol Phenol und
51 Teile Wasser gemischt.

Hierauf wird die Mischung mit Quarzsand solange gemahlen, bis die Partikelgrösse < 5 µm ist, und anschliessend die Dispersion vom Quarzsand abgetrennt.

71,4 Teile der erhaltenen Dispersion werden unter Rühren mit 25 Teilen einer 1 %igen wässrigen Lösung eines Biopolymeren auf Polysaccharidbasis und 3,6 Teilen Wasser homogenisiert. Man erhält eine lagerstabile Dispersion.

### Beispiel 2

In einer Sandmühle werden
35,0 Teile 2-(2'-Hydroxy-4'-methoxyphenyl)-4,6-diphenyl-s-triazin,
10,0 Teile eines salzfreien Kondensationsproduktes aus Na-Ditolylethersulfonat und Formaldehyd,
1,0 Teil eines Anlagerungsproduktes von 9 Mol Ethylenoxid an 1 Mol Nonylphenol,
1,0 Teil eines Anlagerungsprodukts von Ethylenoxid an das Anlagerungsprodukt von Propylenoxid an Propylenglykol mit einem mittleren Molekulargewicht des Polypropylenoxidanteils von ca. 2050 und einem Anteil des Polyethylenoxids im Molekül von ca. 50 % (EO-PO-Blockpolymer) und
53,0 Teile Wasser gemischt.

Die Mischung wird mit Quarzsand solange gemahlen, bis die Partikelgrösse kleiner als 5 µm ist, und anschliessend die Dispersion vom Quarzsand abgetrennt.

71,4 Teile der erhaltenen Dispersion werden unter Rühren mit 25,0 Teilen einer 1 %-igen wässrigen Lösung eines Biopolymeren auf Polysaccharid-Basis und 3,6 Teilen Wasser homogenisiert.

Man erhält eine lagerstabile Dispersion.

### Beispiel 3

In einer Sandmühle werden
35,0 Teile 2-(2'-Hydroxy-4'-methoxyphenyl)-4,6-diphenyl-s-triazin,
10,0 Teile des Natriumsalzes eines Kondensationsproduktes von Phenol, Ligninsulfonat und Formaldehyd,
1,0 Teil eines Anlagerungsproduktes von 9 Mol Ethylenoxid an 1 Mol Nonylphenol,
1,0 Teil eines Anlagerungsprodukts von Ethylenoxid an das Anlagerungsprodukt von Propylenoxid an Propylenglykol mit einem mittleren Molekulargewicht des Polypropylenoxidanteils von ca. 2050 und einem Anteil des Polyethylenoxids im Molekül von von 50 **%** (EO-PO-Blockpolymer) und
53,0 Teile Wasser gemischt.

Die Mischung wird mit Quarzsand solange gemahlen, bis die Partikelgrösse kleiner als 5 µm ist, und anschliessend die Dispersion vom Quarzsand abgetrennt.

71,4 Teile der erhaltenen Dispersion werden unter Rühren mit 25,0 Teilen einer 1 %-igen wässrigen Lösung eines Biopolymeren auf Polysaccharid-Basis und 3,6 Teilen Wasser homogenisiert.

Man erhält eine lagerstabile Dispersion.

### Beispiel 4

In einer Sandmühle werden
35,0 Teile 2-(2'-Hydroxy-4'-methoxyphenyl)-4,6-diphenyl-s-triazin,
10,0 Teile des Natriumsalzes eines Kondensationsproduktes eines Kresol-lsomeren-Gemisches mit Formaldehyd,
1,0 Teil eines Anlagerungsproduktes von 9 Mol Ethylenoxid an 1 Mol Nonylphenol,
1,0 Teil eines Anlagerungsprodukts von Ethylenoxid an das Anlagerungsprodukt von Propylenoxid an Propylenglykol mit einem mittleren Molekulargewicht des Polypropylenoxidanteils von ca. 2050 und einem Anteil des Polyethylenoxids im Molekül von ca 50 % (EO-PO-Blockpolymer) und
53,0 Teile Wasser gemischt.

Die Mischung wird mit Quarzsand solange gemahlen, bis die Partikelgrösse kleiner als 5 µm ist, und anschliessend die Dispersion vom Quarzsand abgetrennt.

71,4 Teile der erhaltenen Dispersion werden unter Rühren mit 25,0 Teilen einer 1 %-igen wässrigen Lösung eines Biopolymeren auf Polysaccharid-Basis und 3,6 Teilen Wasser homogenisiert.

Man erhält eine lagerstabile Dispersion.

### Beispiel 5

In einer Sandmühle werden
35 Teile 2-(2'-Hydroxy-4'-methoxyphenyl)-4,6-diphenyl-s-triazin
14 Teile des mit Triethanolamin neutralisierten Umsetzungsproduktes von Phosphorpentoxid mit einem Oxalkylierungsproduktes mit 18 Ethylenoxideinheiten des Anlagerungsproduktes von 2,5 bis 3 Mol Styrol an 1 Mol Phenol und
51 Teile Wasser gemischt.

Hierauf wird die Mischung mit Quarzsand solange gemahlen, bis die Partikelgrösse < 5 µm ist, und anschliessend die Dispersion vom Quarzsand abgetrennt.

71,4 Teile der erhaltenen Dispersion werden unter Rühren mit 25 Teilen einer 1 %igen wässrigen Lösung eines Biopolymeren auf Polysaccharidbasis und 3,6 Teilen Wasser homogenisiert. Man erhält eine lagerstabile Dispersion.

### Beispiele 6-15

Man verfährt wie in den Beispielen 1 bis 5 beschrieben und homogenisiert je 71,4 Teile der erhaltenen Dispersionen unter Rühren mit 25,0 Teilen einer 1%-igen wässrigen Lösung eines Biopolimeren auf Polysaccharid-Basis, 3,3 Teilen Wasser und 0,3 Teilen Chloracetamid. Die erhaltenen Dispersionen sind lagerstabil.

### Beispiel 16

In einer Sandmühle werden
35 Teile 2-(2'-Hydroxy-4'-propoxyphenyl)-4,6-diphenyl-s-triazin
14 Teile des mit Triethanolamin neutralisierten Umsetzungsproduktes von Phosphorpentoxid mit einem Oxalkylierungsproduktes mit 18 Ethylenoxideinheiten des Anlagerungsproduktes von 2,5 bis 3 Mol Styrol an 1 Mol Phenol,
2,8 Teile N,N'-Ethylen-bis-(stearamid)und
48,2 Teile Wasser gemischt.

Hierauf wird die Mischung mit Quarzsand solange gemahlen, bis die Partikelgrösse < 5 µm ist, und anschliessend die Dispersion vom Quarzsand abgetrennt.

71,4 Teile der erhaltenen Dispersion werden unter Rühren mit 25 Teilen einer 1 %igen wässrigen Lösung eines Biopolymeren auf Polysaccharidbasis, 3,3 Teilen Wasser und 0,3 Teilen Chloracetamid homogenisiert. Man erhält eine lagerstabile Dispersion.

### Beispiel 17

In einer Sandmühle werden
35 Teile 2-(2'-Hydroxy-4'-methoxyphenyl)4,6-diphenyl-s-triazin
14 Teile des mit Triethanolamin neutralisierten Umsetzungsproduktes von Phosphorpentoxid mit einem Oxalkylierungsproduktes mit 18 Ethylenoxideinheiten des Anlagerungsproduktes von 2,5 bis 3 Mol Styrol an 1 Mol Phenol,
2,8 Teile N'N'-Ethylen-bis-(stearamid) und
48,2 Teile Wasser gemischt.

Hierauf wird die Mischung mit Quarzsand solange gemahlen, bis die Partikelgrösse < 5 µm ist, und anschliessend die Dispersion vom Quarzsand abgetrennt.

71,4 Teile der erhaltenen Dispersion werden unter Rühren mit 25 Teilen einer 1 %igen wässrigen Lösung eines Biopolymeren auf Polysaccharidbasis, 3,3 Teilen Wasser und 0,3 Teilen Chloracetamid homogenisiert. Man erhält eine lagerstabile Dispersion.

### Beispiel 18

In einer Sandmühle werden
35,0 Teile 2-(2'-Hydroxy-4'-methoxyphenyl)-4,6-diphenyl-s-triazin,
9,1 Teile eines salzfreien Kondensationsproduktes aus Ditolyethersulfonat und Formaldehyd,
2,1 Teile des mit Triethanolamin neutralisierten Umsetzungsproduktes von Phosphorpentoxid mit einem Oxalkylierungsproduktes mit 18 Mol Ethylenoxideinheiten des Anlagerungsproduktes von 2,5 bis 3 Mol Styrol an 1 Mol Phenol
2,8 Teile N,N'-Ethylen-bis-(stearamid) und
51,0 Teile Wasser gemischt.

Die Mischung wird mit Quarzsand solange gemahlen, bis die Partikelgrösse kleiner als 5 µ ist. Die Dispersion wird vom Quarzsand abgetrennt.

71,4 Teile der erhaltenen Dispersion werden unter Rühren mit 20,0 Teilen einer 2%-igen wässrigen Lösung eines Biopolymeren auf Polysaccharid-Basis, 0,3 Teilen Chloracetamid und 8,3 Teilen Wasser homogenisiert.

Man erhält eine lagerstabile Dispersion.

### Beispiel 19

In einer Sandmühle werden
35,0 Teile 2-(2'-Hydroxy-4'-methoxyphenyl)-4,6-diphenyl-s-triazin,
10,0 Teile eines Kondensationsproduktes eines C₁₆-C₁₈ Fettalkohols mit 25 Mol Ethylenoxid und
55,0 Teile Wasser gemischt.

Die Mischung wird mit Quarzsand solange gemahlen, bis die Partikelgrösse Kleiner als 5 µ ist. Die Dispersion wird vom Quarzsand abgetrennt.

71,4 Teile der erhaltenen Dispersion werden unter Rühren mit 25,0 Teilen einer 2%-igen wässrigen Lösung eines Biopolymeren auf Polysaccharid-Basis, 0,3 Teilen Chloracetamid und 3,3 Teilen Wasser homogenisiert.

Man erhält eine lagerstabile Dispersion.

### Beispiel 20

In einer Sandmühle werden
35,0 Teile 2-(2'-Hydroxy-4'-methoxyphenyl)-4,6-diphenyl-s-triazin,
12,5 Teile eines Oxalkylierungsproduktes mit 18 Mol Ethylenoxideinheiten des Anlagerungsproduktes von
2,5 bis 3 Mol Styrol an 1 Mol Phenol und
53,0 Teile Wasser gemischt.

Die Mischung wird mit Quarzsand solange gemahlen, bis die Partikelgrösse kleiner als 5 µ ist. Die Dispersion wird vom Quarzsand abgetrennt.

71,4 Teile der erhaltenen Dispersion werden unter Rühren mit 25,0 Teilen einer 2%-igen wässrigen Lösung eines Biopolymeren auf Polysaccharid-Basis, 0,3 Teilen Chloracetamid und 3,3 Teilen Wasser homogenisiert.

Man erhält eine lagerstabile Dispersion.

### Beispiel 21

In einer Sandmühle werden
35,0 Teile2-(2'-Hydroxy-4'-methoxyphenyl)-4,6-diphenyl-s-triazin,
21,0 Teile einer 33%-igen wässrigen Lösung des Natriumsalzes des Schwefelsäureesters eines Oxalkylierungsprodukts von Nonylphenol mit 25 Mol Ethylenoxideinheiten und
44,0 Teile Wasser gemischt.

Die Mischung wird mit Quarzsand solange gemahlen, bis die Partikelgrösse Kleiner als 5 µ ist. Die Dispersion wird vom Quarzsand abgetrennt.

71,4 Teile der erhaltenen Dispersion werden unter Rühren mit 25,0 Teilen einer 2%-igen wässrigen Lösung eines Biopolymeren auf Polysaccharid-Basis, 0,3 Teilen Chloracetamid und 3,3 Teilen Wasser homogenisiert.

Man erhält eine lagerstabile Dispersion.

### Beispiel 22

100 g eines Polyestergewirkes (Polyethylenglykolterephthalat) werden in einem HT-Zirkulationsapparat bei 60°C in 3 Liter Wasser eingebracht, welches
9 g Ammoniumsulfat
18 g Dinatriumsalz von Di-(6-sulfonaphthyl-2-)methan
5 g eines fein dispergierten Farbstoffes der Formel 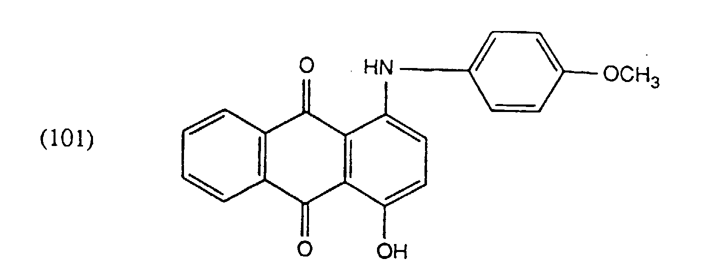
3 g der gemäss Beispiel 1 hergestellten Hilfsmittelformulierung enthält und mit 85 %iger Ameisensäure auf pH 5 eingestellt ist. Man erhitzt das Färbebad, bei ständig zirkulierender Flotte, innerhalb von 30 Minuten auf 130°C und färbt 1 Stunde bei dieser Temperatur. Alsdann wird das Färbebad abgekühlt und das Substrat gespült und wie üblich zur Entfernung von nichffixiertem Farbstoff reduktiv gereinigt. Anschliessend wird das Substrat neutralisiert nochmals gespült und getrocknet. Bedingt durch die stabile mitverwendete Hiltsmittelformulierung wird während des Färbeprozesses weder ein Anstieg des Differenzdruckes festgestellt noch zeigen sich Ablagerungen im Inneren des Wickelkörpers. Man erhält somit eine gleichmässige lichtechte marineblaue Färbung.

Gleichmässige lichtechte marineblaue Färbungen werden auch erhalten, wenn anstelle der Hilfsmittelformulierung gemäss Beispiel 1 die gemäss den Beispielen 2 bis 4 hergestellten Hiltsmittelformulierungen eingesetzt werden.

### Beispiel 23

100 g eines Polyestergewirkes (Polyethylenglykolterephthalat) werden in einem HT-Zirkulationsapparat bei 60°C in 3 Liter Wasser eingebracht, welches
9 g Ammoniumsulfat
18 g Dinatriumsalz von Di-(6-sulfonaphthyl-2-)methan
5 g eines fein dispergierten Farbstoffes der Formel 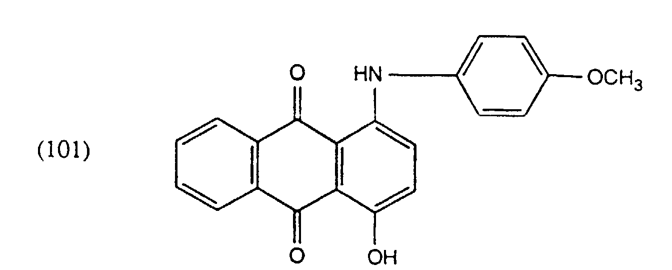
3 g der gemäss Beispiel 5 hergestellten Hilfsmittelformulierung enthält und mit 85 %iger Ameisensäure auf pH 5 eingestellt ist. Man erhitzt das Färbebad, bei ständig zirkulierender Flotte, innerhalb von 30 Minuten auf 130°C und färbt 1 Stunde bei dieser Temperatur. Alsdann wird das Färbebad abgekühlt und das Substrat gespült und wie üblich zur Entfernung von nichtfixierfem Farbstoff reduktiv gereinigt. Anschliessend wird das Substrat neutralisiert, nochmals gespült und getrocknet. Bedingt durch die stabile mitverwendete Hilfsmittelformulierung wird während des Färbeprozesses weder ein Anstieg des Differenzdruckes festgestellt noch zeigen sich Ablagerungen im Inneren des Wickelkörpers. Man erhält somit eine gleichmässige lichtechte marineblaue Färbung.

## Patentansprüche

1. Wässrige Dispersion einer 2-(2'-Hydroxyphenyl)-s-triazinverbindung, dadurch. gekennzeichnet, dass sie
(a) 5 bis 50 Gewichtsprozent einer s-Triazinverbindung der Formel 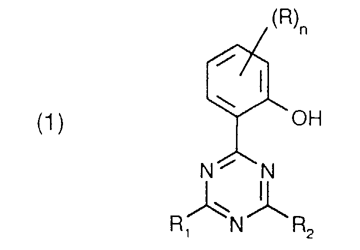 worin
R nieder Alkyl, nieder Alkoxy, Halogen oder Hydroxy,
R₁ und R₂ unabhängig voneinander C₁-C₁₈-Alkyl, durch Hydroxy, nieder Alkoxy, nieder Alkylthio, Amino oder Mono- oder Di-alkylamino substituiertes C₁-C₁₈-Alkyl, Phenyl oder durch Chlor, Hydroxy, nieder Alkyl und/oder nieder Alkoxy substituiertes Phenyl, und
n 0, 1 oder 2 bedeuten,
(b) 0 bis 18 Gewichtsprozent einer anionischen Verbindung aus der Gruppe der
(ba) sauren Ester oder deren Salze von Alkylenoxidaddukten der Formel 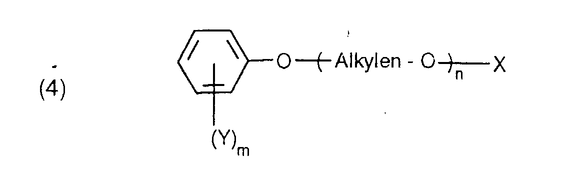 worin
X den Säurerest einer anorganischen, Sauerstoff enthaltenden Säure, wie z.B.
Schwefelsäure oder vorzugsweise Phosphorsäure, oder auch den Rest einer organischen Säure, und
Y C₁-C₁₂-Alkyl, Aryl oder Aralkyl bedeuten, "Alkylen" für den Ethylenrest oder Propylenrest steht, und
m 1 bis 4, und n 4 bis 50 sind,
(bb) Polystyrolsulfonate,
(bc) Fettsäuretauride,
(bd) alkylierten Diphenyloxid -mono- oder di-sulfonate,
(be) Sulfonate von Polycarbonsäureestern,
(bf) mit einer organischen Dicarbonsäure, oder einer anorganischen mehrbasischen Säure in einen sauren Ester überführten Anlagerungsprodukt von 1 bis 60, vorzugsweise 2 bis 30 Mol Ethylenoxid und/oder Propylenoxid an Fettamine, Fettamide, Fettsäuren oder Fettalkohole je mit 8 bis 22 Kohlenstoffatomen oder an drei- bis sechswertige Alkanole mit 3 bis 6 Kohlenstoffatomen,
(bg) Ligninsulfonate, und
(bh) Formaldehyd-Kondensationsprodukte aus der Gruppe der Kondensationsprodukte von Ligninsulfonaten und/oder Phenol und Formaldehyd, Kondensationsprodukte von Ditolylethersulfonaten und Formaldehyd, Kondensationsprodukte von Naphthol- oder Naphthylaminsulfonsäuren mit Formaldehyd, Kondensationsprodukte von Phenolsulfonsäuren und/oder sulfoniertem Dihydroxydiphenylsulfon und Phenolen bzw. Kresolen mit Formaldehyd und/oder Harnstoff sowie Kondensationsprodukte von Diphenyloxid-disulfonsäure-Derivaten mit Formaldehyd
und
(c) 0 bis 18 Gewichtsprozent einer nichtionischen Verbindung aus der Gruppe der
(ca) Alkylenoxidaddukte der Formel 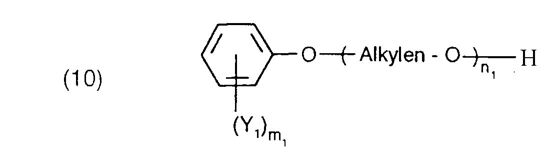 worin
Y₁ C₁-C₁₂-Alkyl, Aryl oder Aralkyl bedeutet,
"Alkylen" für den Ethylenrest oder Propylenrest steht, und
m₁ 1 bis 4 und n₁ 4 bis 50 sind,
(cb) Alkylenoxidaddukte an
(cba) gesättigte oder ungesättigte 1-6-wertige aliphatische Alkohole,
(cbb) Fettsäuren,
(cbc) Fettamine,
(cbd) Fettamide,
(cbe) Diamine,
(cbf) Sorbitanester,
(cc) Alkylenoxid-Kondensationsprodukte (Blockpolymerisate),
(cd) Polymerisate von Vinylpyrrolidon, Vinylacetat oder Vinylalkohol, und
(ce) Co- oder Ter-polymere von Vinylpyrrolidon mit Vinylacetat und/oder Vinylalkohol, enthält, mit der Massgabe, dass von den Komponenten (b) und (c) mindestens eine vorhanden sein muss.

2. Dispersion gemäss Anspruch 1, dadurch gekennzeichnet, dass die Komponente (a) der Formel 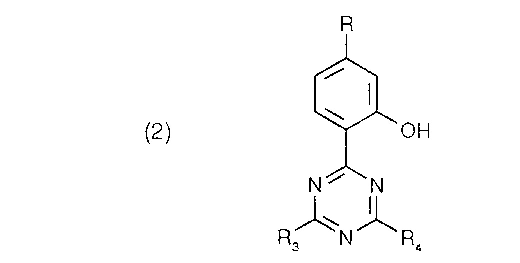 worin
R die in Anspruch 1 angegebene Bedeutung hat, und
R₃ und R₄ unabhängig voneinander Alkyl mit 1 bis 4 C-Atomen, Phenyl oder durch nieder Alkyl und/oder nieder Alkoxy substituiertes Phenyl bedeuten,
entspricht.

3. Dispersion gemäss einem der Ansprüche 1 und 2, dadurch gekennzeichnet, dass die Komponente (a) der Formel 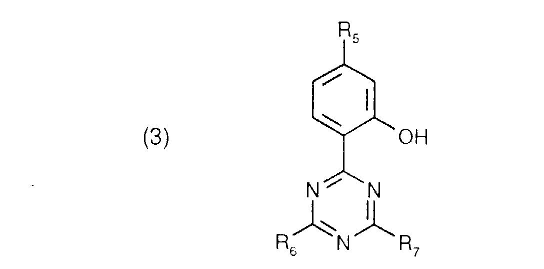 worin
R₅ nieder Alkyl oder nieder Alkoxy. und
R₆ und R₇ unabhängig voneinander Alkyl mit 1 bis 4 C-Atomen oder Phenyl bedeuten,
entspricht.

4. Dispersion gemäss Anspruch 1, dadurch gekennzeichnet, dass in Formel (1) R nieder Alkoxy und R₁ und R₂ je Phenyl darstellen.

5. Dispersion gemäss einem der Ansprüche 1 bis 3, dadurch gekennzeichnet. dass die Komponente (b) eine anionische Verbindung der Formel (4) ist, worin Y C₄-C₁₂-Alkyl, Benzyl oder α-Methylbenzyl bedeutet.

6. Dispersion gemäss einem der Ansprüche 1 bis 3, dadurch gekennzeichnet, dass die Komponente (b) eine Verbindung der Formel 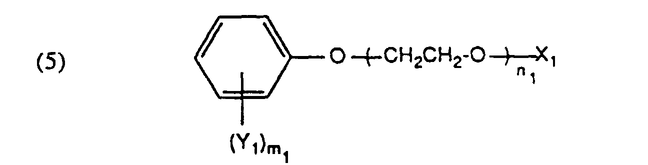 ist, worin
Y₁ C₄-C₁₂-Alkyl, Phenyl, Tolyl, Phenyl-C₁-C₃-alkyl oder Tolyl-C₁-C₃-alkyl bedeutet,
X₁ ein Säurerest ist, der sich von Schwefelsäure oder Orthophosphorsäure ableitet, und
m₁ 1 bis 3, und n₁ 4 bis 40 sind.

7. Dispersion gemäss einem der Ansprüche 1 bis 3, dadurch gekennzeichnet, dass die Komponente (b) ein saurer Phosphorsäureester oder dessen Salz des Oxalkylierungsproduktes von 6 bis 30 Mol Ethylenoxid an 1 Mol 4-Nonylphenol oder Dinonylphenol oder an 1 Mol einer Verbindung, die durch Anlagerung von 1 bis 3 Mol Styrol, α-Methylstyrol oder Vinyltoluol an 1 Mol Phenol, Kresol oder Xylenol hergestellt worden ist, ist.

8. Dispersion gemäss einem der Ansprüche 1 bis 3, dadurch gekennzeichnet, dass die Komponente (b) ein saurer Phosphorsäureester oder dessen Salz des Oxalkylierungsproduktes der Formel 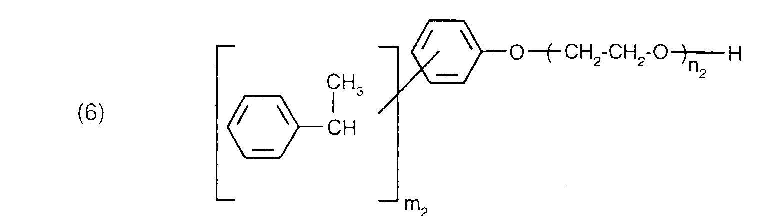 ist, worin
m₂ 1 bis 3 und n₂ 8 bis 30 sind.

9. Dispersion gemäss einem der Ansprüche 1 bis 3, dadurch gekennzeichnet, dass sie als anionische Komponente (b) ein Kondensationsprodukt von Formaldehyd aus der Gruppe der Kondensationsprodukte von Ligninsulfonaten und/oder Phenol und Formaldehyd, Kondensationsprodukte von Ditolylethersulfonaten und Formaldehyd, Kondensationsprodukte von Naphthol- oder Naphthylaminsulfonsäuren mit Formaldehyd, Kondensationsprodukte von Phenolsulfonsäuren und/oder sulfoniertem Dihydroxydiphenylsulfon und Phenolen bzw. Kresolen mit Formaldehyd und/oder Hamstoff sowie Kondensationsprodukte von Diphenyloxid-disulfonsäure-Derivaten mit Formaldehyd, enthält.

10. Dispersion gemäss Anspruch 9, dadurch gekennzeichnet, dass sie als anionische Komponente (b) ein Kondensationsprodukt von Formaldehyd mit Ditolylethersulfonat enthält.

11. Dispersion gemäss einem der Ansprüche 1 bis 3, dadurch gekennzeichnet, dass die anionische Komponente (b) ein Gemisch aus den Komponenten (ba) bis (bh) ist.

12. Dispersion gemäss Anspruch 11, dadurch gekennzeichnet, dass die anionische Komponente (b) ein Gemisch aus einem Kondensationsprodukt von Formaldehyd mit Ditolylethersulfonat und einem sauren Phosphorsäureester oder dessen Salz des Oxalkylierungsproduktes der in Anspruch 8 definierten Formel (6) ist.

13. Dispersion gemäss einem der Ansprüche 1 bis 3, dadurch gekennzeichnet, dass die Komponente (c) ein Addukt von 8 bis 30 Mol Ethylenoxid an 1 Mol 4-Nonylphenol, an 1 Mol Dinonylphenol oder an 1 Mol von Verbindungen, die durch Anlagerung von 1 bis 3 Mol von Styrolen an 1 Mol Phenol hergestellt werden, ist.

14. Dispersion gemäss einem der Ansprüche 1 bis 3, dadurch gekennzeichnet, dass die Komponente (c) ein Ethylenoxidaddukt der Formel 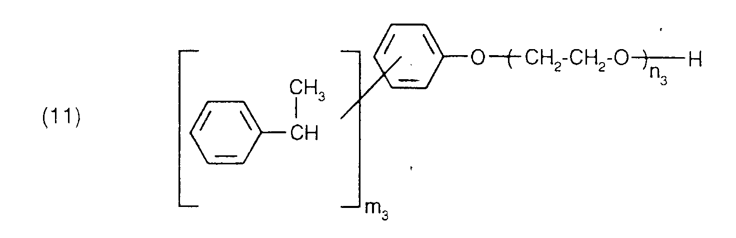 ist, worin
m₃ 1 bis 3 und n₃ 8 bis 30 bedeuten.

15. Dispersion gemäss einem der Ansprüche 1 bis 3, dadurch gekennzeichnet, dass sie als anionische Komponente (b) ein Kondensationsprodukt von Formaldehyd aus der Gruppe der Kondensationsprodukte von Ligninsulfonaten und/oder Phenol und Formaldehyd, Kondensationsprodukte von Ditolylethersulfonaten und Formaldehyd, Kondensationsprodukte von Naphthol- oder Naphthylaminsulfonsäuren mit Formaldehyd, Kondensationsprodukte von Phenolsulfonsäuren und/oder sulfoniertem Dihydroxydiphenylsulfon und Phenolen bzw. Kresolen mit Formaldehyd und/oder Hamstoff sowie Kondensationsprodukte von Diphenyloxid-disulfonsäure-Derivaten mit Formaldehyd, und als nichtionische Komponente (c) ein Alkylenoxidaddukt der in Anspruch 1 definierten Formel (10) enthält.

16. Dispersion gemäss Anspruch 15, dadurch gekennzeichnet, dass sie als nichtionische Komponente (c) eine Mischung aus einem Alkylenoxidaddukt der in Anspruch 1 definierten Formel (10) und einem Alkylenoxid-Kondensationsprodukt (cc) enthält.

17. Dispersion gemäss Anspruch 16, dadurch gekennzeichnet, dass sie als nichtionische Komponente (c) ein Alkylenoxid-Kondensationsprodukt (cc) enthält.

18. Dispersion gemäss einem der Ansprüche 1 bis 3, dadurch gekennzeichnet, dass sie als anionische Komponente (b) ein Kondensationsprodukt von Formaldehyd aus der Gruppe der Kondensationsprodukte von Ligninsulfonaten und/oder Phenol und Formaldehyd, Kondensationsprodukte von Ditolylethersulfonaten und Formaldehyd, Kondensationsprodukte von Naphthol- oder Naphthylaminsulfonsäuren mit Formaldehyd. Kondensalionsprodukte von Phenolsulfonsäuren und/oder sulfoniertem Dihydroxydiphenylsulfon und Phenolen bzw. Kresolen mit Formaldehyd und/oder Harnstoff sowie Kondensationsprodukte von Diphenyloxid-disulfonsäure-Derivaten mit Formaldehyd, und als nichtionische Komponente (c) ein Alkylenoxid-Addukt an Sorbitanester enthält.

19. Dispersion gemäss Anspruch 13, dadurch gekennzeichnet, dass sie als anionische Komponente (b) einen sauren Phosphorsäureester oder dessen Salz des Oxalkylierungsproduktes der in Anspruch 8 definierten Formel (6) und als nichtionogene Komponente (c) ein Alkylenoxidaddukt der in Anspruch 1 definierten Formel (10) enthält.

20. Dispersion gemäss einem der Ansprüche 1 bis 19, dadurch gekennzeichnet, dass sie zusätzlich als Komponente (d) ein Stabilisierungs- oder Verdickungsmittel enthält.

21. Dispersion gemäss Anspruch 20, dadurch gekennzeichnet, dass die Komponente (d) eine 0,5 bis 10%-ige wässrige Lösung oder Dispersion einer polymerisierten ethylenisch-ungesättigten Mono- oder Dicarbonsäure von 3 bis 5 Kohlenstoffatomen, insbesondere Polyacrylsäure, ist.

22. Dispersion gemäss Anspruch 20, dadurch gekennzeichnet, dass die Komponente (d) ein Polysacharid ist.

23. Dispersion gemäss einem der Ansprüche 1 bis 22, dadurch gekennzeichnet, dass sie zusätzlich ein Antischaummittel enthält.

24. Dispersion gemäss Anspruch 23, dadurch gekennzeichnet, dass das Antischaummittel ein Alkylendiamid der Formel
(13) V₁-CO-NH-Q-NH-CO-V₂
ist, in der V₁ und V₂ unabhängig voneinander, je einen aliphatischen Rest mit 9 bis 23 Kohlenstoffatomen, und Q einen Alkylenrest mit 1 bis 8 Kohlenstoffatomen bedeuten.

25. Dispersion gemäss einem der Ansprüche 1 bis 24, dadurch gekennzeichnet, dass sie zusätzlich ein Konservierungsmittel und/oder ein Gefrierschutzmittel enthält.

26. Dispersion gemäss Anspruch 1, dadurch gekennzeichnet, dass sie, bezogen auf die gesamte Dispersion
5-50 Gewichtsprozent der Komponente (a),
0-18 Gewichtsprozent der Komponente (b),
0-18 Gewichtsprozent der Komponente (c),
0- 5 Gewichtsprozent der Komponente (d),
0- 8 Gewichtsprozent einer weiteren, von der Komponente (b) verschiedenen anionischen Komponente,
0- 8 Gewichtsprozent einer weiteren, von der Komponente (c) verschiedenen nichtonischen Komponente,
0- 7 Gewichtsprozent eines Antischaummittels,
0- 1 Gewichtsprozent eines Konservierungsmittels und
0-20 Gewichtsprozent eines Gefrierschutzmittels,
enthält.

27. Verwendung der wässrigen Dispersion gemäss einem der Ansprüche 1 bis 26 beim Färben von synthetischen Fasermaterialien, insbesondere Polyesterfasern oder säuremodifizierten Polyesterfasern.

28. Verfahren zum Färben von Synthesefasern, vorzugsweise Polyesterfasern oder säuremodifizierten Polyesterfasern, enthaltendem Textilmaterial mit Dispersionsfarbstoffen bzw. kationischen Farbstoffen, dadurch gekennzeichnet, dass man dieses Material in Gegenwart einer wässrigen Dispersion einer s-Triazinverbindung gemäss einem der Ansprüche 1 bis 26 färbt.

## Claims

1. An aqueous dispersion of a 2-(2'-hydroxyphenyl)-s-triazine compound, which contains
(a) 5 to 50 per cent by weight of an s-triazine compound of formula 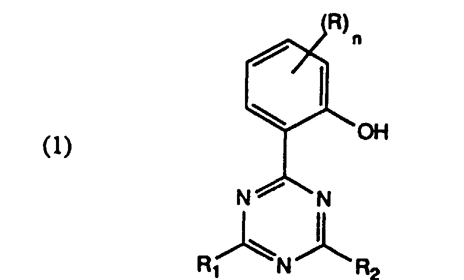 wherein
R is lower alkyl, lower alkoxy, halogen or hydroxyl,
R₁ and R₂ are each independently of the other C₁-C₁₈alkyl, are C₁-C₁₈alkyl which is substituted by hydroxyl, lower alkoxy, lower alkylthio, amino or mono- or dialkylamino, or are phenyl or phenyl which is substituted by chloro, hydroxyl, lower alkyl and/or lower alkoxy, and
n is 0, 1 or 2,
(b) 0 to 18 per cent by weight of an anionic compound from the group consisting of
(ba) acid esters, or their salts, of alkylene oxide adducts of formula 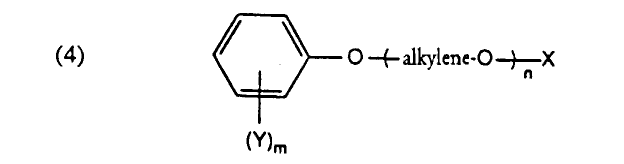 wherein
X is the acid radical of an inorganic oxygen-containing acid such as sulfuric acid or, preferably, phosphoric acid, or else is the radical of an organic acid, and
Y is C₁-C₁₂alkyl, aryl or aralkyl, "alkylene" is the ethylene or propylene radical, and
m is 1 to 4, and n is 4 to 50,
(bb) polystyrenesulfonates,
(bc) fatty acid taurides,
(bd) alkylated diphenyl oxide mono- or disulfonates,
(be) sulfonates of polycarboxylates,
(bf) an adduct of 1 to 60 mol, preferably 2 to 30 mol, of ethylene oxide and/or propylene oxide with fatty amines, fatty amides, fatty acids or fatty alcohols, each of 8 to 22 carbon atoms, or with trihydric to hexahydric alkanols of 3 to 6 carbon atoms, which adduct has been converted into an acid ester with an organic dicarboxylic acid or an inorganic polybasic acid,
(bg) ligninsulfonates, and
(bh) formaldehyde condensation products from the group consisting of the condensation products of ligninsulfonates and/or phenol and formaldehyde, condensation products of ditolyl ether sulfonates and formaldehyde, condensation products of naphthol- or naphthylaminesulfonic acids with formaldehyde, condensation products of phenolsulfonic acids and/or sulfonated dihydroxydiphenyl sulfone and phenols or cresols with formaldehyde and/or urea, as well as condensation products of diphenyl oxide-disulfonic acid derivatives with formaldehyde,
and
(c) 0 to 18 per cent by weight of a nonionic compound from the group consisting of
(ca) alkylene oxide adducts of formula 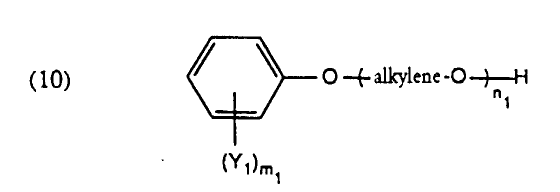 wherein
Y₁ is C₁-C₁₂alkyl, aryl or aralkyl,
"alkylene" is the ethylene or propylene radical, and
m₁ is 1 to 4 and n₁ is 4 to 50,
(cb) adducts of alkylene oxide with
(cba) saturated or unsaturated monohydric to hexahydric aliphatic alcohols,
(cbb) fatty acids,
(cbc) fatty amines,
(cbd) fatty amides,
(cbe) diamines,
(cbf) sorbitan esters,
(cc) alkylene oxide condensation products (block polymers),
(cd) polymers of vinylpyrrolidone, vinyl acetate or vinyl alcohol, and
(ce) copolymers or terpolymers of vinylpyrrolidone with vinyl acetate and/or vinyl alcohol,
with the proviso that at least one of components (b) and (c) must be present.

2. A dispersion according to claim 1, wherein component (a) is of formula 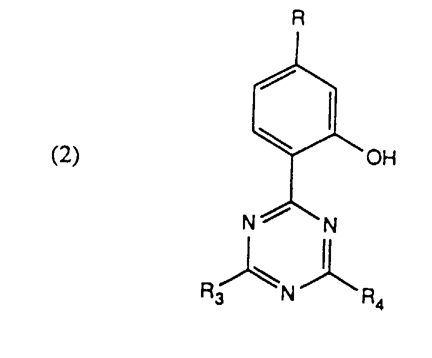 wherein
R is as defined in claim 1, and
R₃ and R₄ are each independently of the other alkyl of 1 to 4 carbon atoms, phenyl or phenyl which is substituted by lower alkyl and/or lower alkoxy.

3. A dispersion according to either claim 1 or claim 2, wherein component (a) is of formula 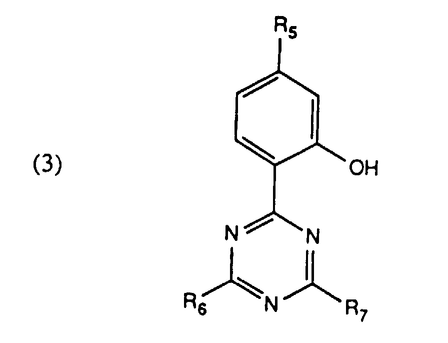 wherein
R₅ is lower alkyl or lower alkoxy, and
R₆ and R₇ are each independently of the other alkyl of 1 to 4 carbon atoms or phenyl.

4. A dispersion according to claim 1, wherein in formula (1) R is lower alkoxy and R₁ and R₂ are each phenyl.

5. A dispersion according to any one of claims 1 to 3, wherein component (b) is an anionic compound of formula (4) wherein Y is C₄-C₁₂alkyl, benzyl or α-methylbenzyl.

6. A dispersion according to any one of claims 1 to 3, wherein component (b) is a compound of formula 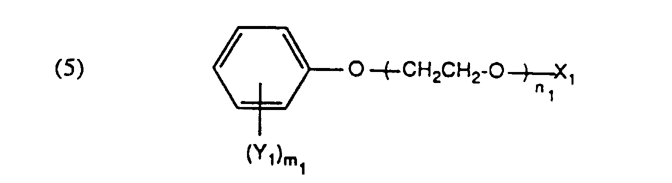 wherein
Y₁ is C₄-C₁₂alkyl, phenyl, tolyl, phenyl-C₁-C₃alkyl or tolyl-C₁-C₃alkyl,
X₁ is an acid radical which is derived from sulfuric acid or orthophosphoric acid, and
m₁ is 1 to 3, and n₁ is 4 to 40.

7. A dispersion according to any one of claims 1 to 3, wherein component (b) is an acid phosphoric ester, or the salt thereof, of the alkoxylation product of 6 to 30 mol of ethylene oxide with 1 mol of 4-nonylphenol or dinonylphenol, or with 1 mol of a compound which has been prepared by addition of 1 to 3 mol of styrene, α-methylstyrene or vinyltoluene onto 1 mol of phenol, cresol or xylenol.

8. A dispersion according to any one of claims 1 to 3, wherein component (b) is an acid phosphoric ester, or the salt thereof, of the alkoxylation product of formula 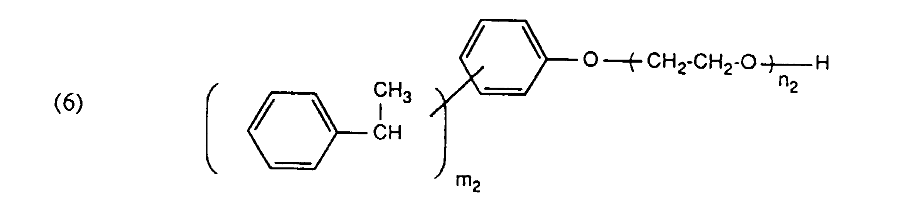 wherein
m₂ is 1 to 3 and n₂ is 8 to 30.

9. A dispersion according to any one of claims 1 to 3, wherein anionic component (b) is a condensation product of formaldehyde from the group consisting of the condensation products of ligninsulfonates and/or phenol and formaldehyde, condensation products of ditolyl ether sulfonates and formaldehyde, condensation products of naphthol- or naphthylaminesulfonic acids with formaldehyde, condensation products of phenolsulfonic acids and/or sulfonated dihydroxydiphenyl sulfone and phenols or cresols with formaldehyde and/or urea, as well as condensation products of diphenyl oxide-disulfonic acid derivatives with formaldehyde.

10. A dispersion according to claim 9, wherein anionic component (b) is a condensation product of formaldehyde and ditolyl ether sulfonate.

11. A dispersion according to any one of claims 1 to 3, wherein the anionic component (b) is a mixture of components (ba) to (bh).

12. A dispersion according to claim 11, wherein the anionic component (b) is a mixture of a condensation product of formaldehyde and ditolyl ether sulfonate with an acid phosphoric ester, or the salt thereof, of the alkoxylation product of formula (6) as defined in claim 8.

13. A dispersion according to any one of claims 1 to 3, wherein component (c) is an adduct of 8 to 30 mol of ethylene oxide with 1 mol of 4-nonylphenol, with 1 mol of dinonylphenol or with 1 mol of a compound which is prepared by the addition of 1 to 3 mol of a styrene onto 1 mol of phenol.

14. A dispersion according to any one of claims 1 to 3, wherein component (c) is an ethylene oxide adduct of formula 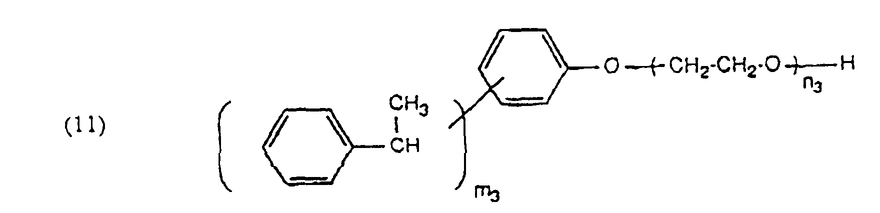 wherein
m₃ is 1 to 3 and n₃ is 8 to 30.

15. A dispersion according to any one of claims 1 to 3, wherein anionic component (b) is a condensation product of formaldehyde from the group consisting of the condensation products of ligninsulfonates and/or phenol and formaldehyde, condensation products of ditolyl ether sulfonates and formaldehyde, condensation products of naphthol- or naphthylaminesulfonic acids with formaldehyde, condensation products of phenolsulfonic acids and/or sulfonated dihydroxydiphenyl sulfone and phenols or cresols with formaldehyde and/or urea, as well as condensation products of diphenyl oxide-disulfonic acid derivatives with formaldehyde, and nonionic component (c) is an alkylene oxide adduct of formula (10) as defined in claim 1.

16. A dispersion according to claim 15, wherein nonionic component (c) is a mixture of an alkylene oxide adduct of formula (10) as defined in claim 1 and an alkylene oxide condensation product (cc).

17. A dispersion according to claim 16, wherein nonionic component (c) is an alkylene oxide condensation product (cc).

18. A dispersion according to any one of claims 1 to 3, wherein anionic component (b) is a condensation product of formaldehyde from the group consisting of the condensation products of ligninsulfonates and/or phenol and formaldehyde, condensation products of ditolyl ether sulfonates and formaldehyde, condensation products of naphthol- or naphthylaminesulfonic acids with formaldehyde, condensation products of phenolsulfonic acids and/or sulfonated dihydroxydiphenyl sulfone and phenols or cresols with formaldehyde and/or urea, as well as condensation products of diphenyl oxide-disulfonic acid derivatives with formaldehyde, and nonionic component (c) is an adduct of alkylene oxide with a sorbitan ester.

19. A dispersion according to claim 13, wherein anionic component (b) is an acid phosphoric ester, or the salt thereof, of the alkoxylation product of formula (6) as defined in claim 8 and nonionic component (c) is an alkylene oxide adduct of formula (10) as defined in claim 1.

20. A dispersion according to any one of claims 1 to 19, which additionally comprises as component (d) a stabiliser or thickener.

21. A dispersion according to claim 20, wherein component (d) is a 0.5 to 10 % strength aqueous solution or dispersion of a polymerised ethylenically unsaturated mono- or dicarboxylic acid of 3 to 5 carbon atoms, especially polyacrylic acid.

22. A dispersion according to claim 20, wherein component (d) is a polysaccharide.

23. A dispersion according to any one of claims 1 to 22, which additionally comprises an antifoam.

24. A dispersion according to claim 23, wherein the antifoam is an alkylenediamide of formula
(13) V₁-CO-NH-Q-NH-CO-V₂
in which V₁ and V₂ are each independently of the other an aliphatic radical of 9 to 23 carbon atoms, and Q is an alkylene radical of 1 to 8 carbon atoms.

25. A dispersion according to any one of claims 1 to 24, which additionally comprises a preservative and/or an antifreeze agent.

26. A dispersion according to claim 1, which comprises, based on the entire dispersion,
5-50 per cent by weight of component (a),
0-18 per cent by weight of component (b),
0-18 per cent by weight of component (c),
0 - 5 per cent by weight of component (d),
0 - 8 per cent by weight of a further anionic component other than component (b),
0 - 8 per cent by weight of a further nonionic component other than component (c),
0 - 7 per cent by weight of antifoam,
0 - 1 per cent by weight of preservative, and
0-20 per cent by weight of antifreeze agent.

27. Use of an aqueous dispersion according to any one of claims 1 to 26 in dyeing synthetic fibre materials, especially polyester fibres or acid-modified polyester fibres.

28. A process for dyeing textile material containing synthetic fibres, preferably polyester fibres or acid-modified polyester fibres, with disperse or cationic dyes, which comprises dyeing said material in the presence of an aqueous dispersion of an s-triazine compound according to any one of claims 1 to 26.

## Revendications

1. Dispersion aqueuse d'un composé de type 2-(2'-hydroxyphényl)-*s*-triazine, caractérisée en ce qu'elle contient
(a) de 5 à 50 % en poids d'un composé de type *s*-triazine de formule 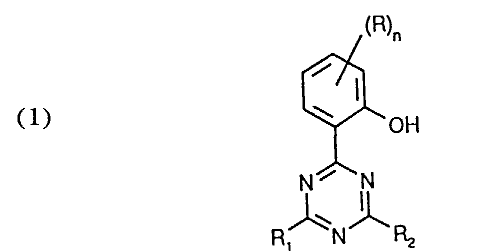 dans laquelle
R représente un groupe alkyle inférieur, alcoxy inférieur, un atome d'halogène ou un groupe hydroxy,
R₁ et R₂ représentent indépendamment l'un de l'autre un groupe alkyle en C₁₋₁₈, un groupe alkyle en C₁₋₁₈ substitué par un groupe hydroxy, alcoxy inférieur, alkylthio inférieur, amino ou mono- ou dialkylamino, un groupe phényle ou phényle substitué par un atome de chlore, un groupe hydroxy, alkyle inférieur et/ou alcoxy inférieur et
n vaut 0, 1 ou 2,
(b) de 0 à 18 % en poids d'un composé anionique choisi dans le groupe formé par
(ba) les esters acides ou leurs sels de produits de polyaddition d'oxyde d'alkylène de formule 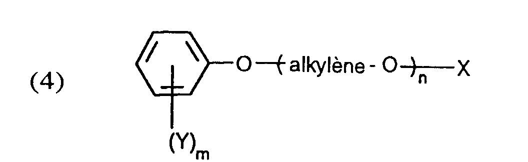 dans laquelle
X représente un résidu d'un acide minéral, comportant de l'oxygène, comme par exemple l'acide sulfurique ou, de préférence, l'acide phosphorique, ou encore le résidu d'un acide organique et
Y représente un groupe alkyle en C₁₋₁₂, aryle ou aralkyle,
"alkylène" représente un résidu éthylène ou propylène et
m vaut de 1 à 4 et
n de 4 à 50,
(bb) les polystyrènesulfonates,
(bc) les amides d'acides gras et de taurine,
(bd) les mono- ou disulfonato-diphényléthers alkylés,
(be) les polycarboxylates sulfonatés,
(bf) les esters acides obtenus par réaction d'un acide organique dicarboxylique ou d'un polyacide minéral avec les produits d'addition de 1 à 60 moles, de préférence de 2 à 30 moles d'oxyde d'éthylène et/ou d'oxyde de propylène sur des amines grasses, des amides gras, des acides gras ou des alcools gras comportant de 8 à 22 atomes de carbone ou sur des alcanols tri- à hexavalents comportant de 3 à 6 atomes de carbone,
(bg) les ligninesulfonates et
(bh) les produits de condensation à base de formaldéhyde choisis dans le groupe formé par les produits de condensation de ligninesulfonates et/ou de phénol avec du formaldéhyde, les produits de condensation de ditolyléthersulfonates avec du formaldéhyde, les produits de condensation d'acides naphtolsulfoniques ou naphtylamine-sulfoniques avec du formaldéhyde, les produits de condensation d'acides phénolsulfoniques et/ou de dihydroxydiphénylsulfone sulfonée et de phénol ou de crésols avec du formaldéhyde et/ou d'urée, ainsi que les produits de condensation de dérivés de l'acide diphényléther-disulfonique avec du formaldéhyde; et
(c) de 0 à 18 % en poids d'un composé non ionique choisi dans le groupe formé par,
(ca) les produits de polyaddition d'oxyde d'alkylène de formule 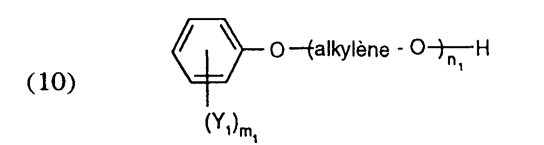 dans laquelle
Y₁ représente un résidu alkyle en C₁₋₁₂, un groupe aryle ou aralkyle,
"alkylène" représente un résidu éthylène ou propylène et
m₁ vaut de 1 à 4 et n₁ de 4 à 50,
(cb) les produits de polyaddition d'oxyde d'alkylène sur
(cba) des alcools aliphatiques mono- à hexavalents saturés ou insaturés,
(cbb) des acides gras,
(cbc) des amines grasses,
(cbd) des amides gras,
(cbe) des diamines,
(cbf) des esters de sorbitane,
(cc) les produits de polymérisation d'oxyde d'alkylène (copolymères séquencés),
(cd) les polymères de vinylpyrrolidone, d'acétate de vinyle et d'alcool vinylique, et
(ce) les copolymères ou terpolymères de vinylpyrrolidone et d'acétate de vinyle et/ou d'alcool vinylique;
avec la réserve qu'au moins un des composants (b) et (c) soit présent.

2. Dispersion conforme à la revendication 1, caractérisée en ce que le composant (a) répond à la formule 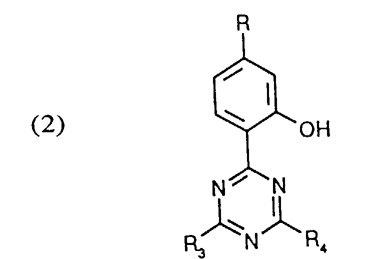 dans laquelle
R a la signification indiquée dans la revendication 1 et
R₃ et R₄ représentent, indépendamment l'un de l'autre, un groupe alkyle comportant de 1 à 4 atomes de carbone, un groupe phényle ou un groupe phényle substitué par un groupe alkyle et/ou alcoxy inférieurs.

3. Dispersion selon une des revendications 1 et 2, caractérisée en ce que le composant (a) répond à la formule 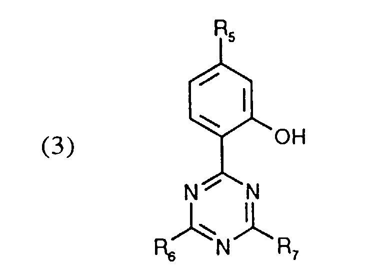 dans laquelle
R₅ représente un groupe alkyle ou alcoxy inférieurs et
R₆ et R₇ représentent, indépendamment l'un de l'autre, un groupe alkyle comportant de 1 à 4 atomes de carbone ou un groupe phényle.

4. Dispersion selon la revendication 1, caractérisée en ce que, dans la formule (1), R représente un groupe alcoxy inférieur et R₁ et R₂ représentent chacun un groupe phényle.

5. Dispersion selon une des revendications 1 à 3, caractérisée en ce que le composant (b) est un composé anionique de formule (4) dans laquelle Y représente un groupe alkyle en C₄₋₁₂, benzyle ou α-méthylbenzyle.

6. Dispersion selon une des revendications 1 à 3, caractérisé en ce que le composant (b) est un composé de formule 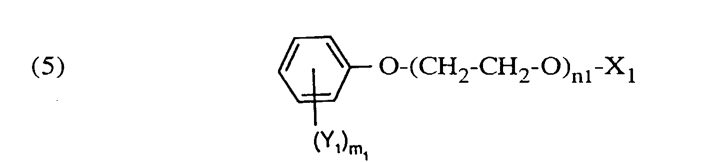 dans laquelle
Y₁ représente un groupe alkyle en C₄₋₁₂, phényle, tolyle, phényl-(alkyle en C₁₋₃) ou tolyl-(alkyle en C₁₋₃),
X₁ représente un résidu acide dérivé d'acide sulfurique ou d'acide orthophosphorique, et
m₁ vaut de 1 à 3 et
n₁ entre 4 et 40.

7. Dispersion selon une des revendications 1 à 3, caractérisée en ce que le composant (b) est un ester phosphate acide, ou le sel correspondant, d'un produit d'addition de 6 à 30 moles d'oxyde d'éthylène sur 1 mole de 4-nonylphénol ou de dinonylphénol ou sur 1 mole d'un composé obtenu par addition de 1 à 3 moles de styrène, d'α-méthylstyréne ou de vinyltoluène sur 1 mole de phénol, de crésol ou de xylénol.

8. Dispersion selon une des revendications 1 à 3, caractérisée en ce que le composant (b) est un ester phosphate acide, ou le sel correspondant, du produit de polyaddition d'oxyde d'alkylène de formule 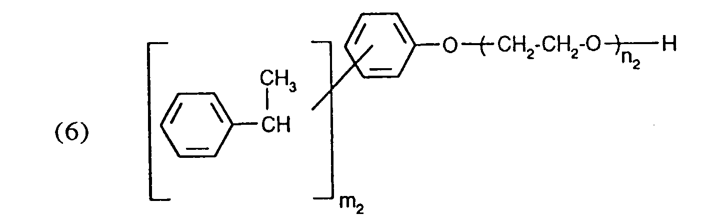 dans laquelle m₂ vaut de 1 à 3 et n₂ de 8 à 30.

9. Dispersion selon l'une des revendications 1 à 3, caractérisée en ce qu'elle contient, comme composant anionique (b), un produit de condensation de formaldéhyde choisi parmi les produits résultant de la condensation de ligninesulfonates et/ou de phénol avec du formaldéhyde, les produits résultant de la condensation de ditolyléthersulfonates avec du formaldéhyde, les produits résultant de la condensation d'acides naphtolsulfoniques ou naphtylamine-sulfoniques avec du formaldéhyde, les produits résultant de la condensation d'acides phénolsulfoniques et/ou de dihydroxydiphénylsulfone sulfonée et de phénols ou de crésols avec du formaldéhyde et/ou de l'urée, ainsi que les produits résultant de la condensation de dérivés d'acide diphényloxyde-disulfonique avec du formaldéhyde.

10. Dispersion selon la revendication 9, caractérisée en ce qu'elle contient, comme composant anionique (b), un produit de condensation de formaldéhyde et de ditolyléthersulfonate.

11. Dispersion selon une des revendications 1 à 3, caractérisée en ce que le composant anionique (b) est un mélange des composants (ba) à (bh).

12. Dispersion selon la revendication 11, caractérisée en ce que le composant anionique (b) est un mélange d'un produit de condensation de formaldéhyde et de ditolyléthersulfonate et d'un ester phosphate acide, ou du sel correspondant, du produit de polyaddition d'oxyde d'alkylène de formule (6) définie dans la revendication 8.

13. Dispersion selon une des revendications 1 à 3, caractérisée en ce que le composant (c) est un produit d'addition de 8 à 30 moles d'oxyde d'éthylène sur 1 mole de 4-nonylphénol, sur 1 mole de dinonylphénol ou sur 1 mole de composés obtenus par addition de 1 à 3 moles de styrènes sur 1 mole de phénol.

14. Dispersion selon une des revendications 1 à 3, caractérisée en ce que le composant (c) est un produit d'éthoxylation de formule 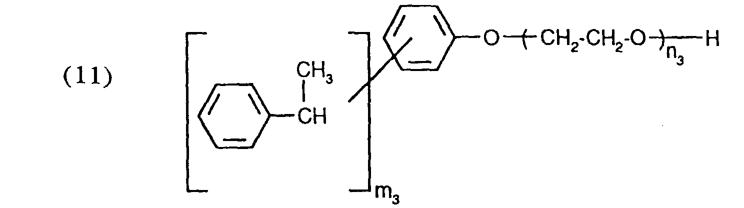 dans laquelle m₃ vaut entre 1 et 3 et n₃ entre 8 et 30.

15. Dispersion conforme à une des revendications 1 à 3, caractérisée en ce qu'elle contient, comme composant anionique (b), un produit de condensation de formaldéhyde choisi dans le groupe formé par les produits résultant de la condensation de ligninesulfonates et/ou de phénol avec du formaldéhyde, les produits résultant de la condensation de ditolyléthersulfonates avec du formaldéhyde, les produits résultant de la condensation d'acides naphtolsulfoniques ou naphtylamine-sulfoniques avec du formaldéhyde. les produits résultant de la condensation d'acides phénolsulfoniques et/ou de dihydroxydiphénylsulfone sulfonée et de phénols ou de crésols avec du formaldéhyde et/ou de l'urée, ainsi que les produits résultant de la condensation de dérivés d'acide diphényloxyde-disulfonique avec du formaldéhyde, et, comme composant non ionique (c), un produit de polyaddition d'oxyde d'alkylène de formule (10) définie dans la revendication 1.

16. Dispersion selon la revendication 15, caractérisée en ce qu'elle contient, comme composant non ionique (c), un mélange d'un produit de polyaddition d'oxyde d'alkylène de formule (10) définie dans la revendication 1 et d'un produit de polymérisation d'oxyde d'alkylène (cc).

17. Dispersion selon la revendication 16, caractérisée en ce qu'elle contient, comme composant non ionique (c), un produit de polymérisation d'oxyde d'alkylène (cc).

18. Dispersion selon une des revendications 1 à 3, caractérisée en ce qu'elle contient, comme composant anionique (b), un produit de condensation de formaldéhyde choisi dans le groupe formé par les produits résultant de la condensation de ligninesulfonates et/ou de phénol avec du formaldéhyde, les produits résultant de la condensation de ditolyléthersulfonates avec du formaldéhyde, les produits résultant de la condensation d'acides naphtolsulfoniques ou naphtylamine-sulfoniques avec du formaldéhyde. les produits résultant de la condensation d'acides phénolsulfoniques et/ou de dihydroxydiphénylsulfone sulfonée et de phénols ou de crésols avec du formaldéhyde et/ou de l'urée, ainsi que les produits de condensation de dérivés d'acide diphényloxyde-disulfonique avec du formaldéhyde et, comme composant non ionique (c) un produit d'addition d'oxyde d'alkylène sur un ester de sorbitane.

19. Dispersion selon la revendication 13, caractérisée en ce qu'elle contient, comme composant anionique (b), un ester phosphate acide, ou le sel correspondant, d'un produit de polyaddition d'oxyde d'alkylène de formule (6) définie dans la revendication 8 et, comme composant non ionogène (c), un produit de polyaddition d'oxycd d'alkylène de formule (10) définie dans la revendication 1.

20. Dispersion selon une des revendications 1 à 19, caractérisée en ce qu'elle contient en outre, comme composant (d), un agent stabilisant ou épaississant.

21. Dispersion selon la revendication 20, caractérisée en ce que le composant (d) est une solution ou dispersion aqueuses à 0,5 - 10 % d'un polymère d'un acide mono- ou dicarboxylique à insaturation éthylénique comportant-de 3 à 5 atomes de carbone, en particulier du poly(acide acrylique).

22. Dispersion selon la revendication 20, caractérisée en ce que le composant (d) est un polysaccharide.

23. Dispersion selon une des revendications 1 à 22, caractérisée en ce qu'elle contient en outre un agent anti-mousse.

24. Dispersion selon la revendication 23, caractérisée en ce que l'agent anti-mousse est un alkylènediamide de formule
(13) V₁ -CO-NH-Q-NR-CO-V₂
dans laquelle V₁ et V₂ représentent, indépendamment l'un de l'autre, un résidu aliphatique comportant de 9 à 23 atomes de carbone et Q un résidu alkylène comportant de 1 à 8 atomes de carbone.

25. Dispersion selon une des revendications 1 à 24, caractérisée en ce qu'elle contient en outre un agent conservateur et/ou un agent anti-gel.

26. Dispersion selon la revendication 1, caractérisée en ce qu'elle contient, par rapport au poids total de la dispersion
de 5 - 50 % en poids du composant (a),
de 0 - 18 % en poids du composant (b),
de 0 - 18 % en poids du composant (c),
de 0 - 5 % en poids du composant (d),
de 0 - 8 % en poids des autres composants anioniques différents du composant (b),
de 0 - 8 % en poids des autres composants non ioniques différents du composant (c),
de 0 - 7 % en poids d'un agent anti-mousse,
de 0 - 1 % en poids d'un agent conservateur et
de 0 - 20 % en poids d'un agent anti-gel.

27. Utilisation de la dispersion aqueuse selon une des revendications 1 à 26 pour la teinture de matériaux fibreux synthétiques, en particulier de fibres en polyester ou en polyester portant des groupes acides.

28. Procédé pour la teinture de matériaux textiles contenant des fibres synthétiques, de préférence des fibres en polyester ou en polyester portant des groupes acides, par des colorants de dispersion ou des colorants cationiques, caractérisé en ce que ce matériau est teint en présence d'une dispersion aqueuse contenant un composé de type s-triazine conforme à une des revendications 1 à 26.
